# EUROPEAN PATENT APPLICATION

(11) **EP 4 614 894 A1**
(43) Date of publication of application: **10.09.2025**
(21) Application number: 22963973.7
(22) Date of filing: 03.11.2022
(51) Int. Cl.: H04L 27/00

(54) **POSITIONING MODE DETERMINATION METHODS AND APPARATUSES**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/129671
(87) International publication number: WO 2024/092663

(57) **Abstract**

The present disclosure belongs to the technical field of communications. Provided are positioning mode determination methods and apparatuses, a device and a storage medium. A method comprises: in response to a positioning process initiated by a first terminal device, executing at least one of the following operations: determining a positioning mode corresponding to the positioning process; and receiving a positioning mode which corresponds to the positioning process and is sent by a network device. The present disclosure provides a processing method for the scenario of "positioning mode determination", so as to provide a positioning mode determination mechanism when the first terminal device initiates the positioning process, thus reducing the situation that inaccurate positioning mode determination results in mismatch between a positioning mode and positioning information, or inaccessibility to the positioning information, and reducing the situation of positioning failure. The method can also determine positioning information corresponding to the positioning mode, thus improving the accuracy of positioning information determination.

## Description

### TECHNICAL FIELD

The disclosure relates to the field of communication technologies, and in particular, to a method and an apparatus for determining a positioning mode, a device, and a storage medium.

### BACKGROUND

In communication systems, the positioning of sidelinks between terminals includes absolute positioning, relative positioning, and ranging. For ranging, usually only two terminals are involved, that is, ranging is carried out between two terminals. However, for absolute positioning and relative positioning, multiple positioning modes may be involved, such as Uu interface positioning mode, SL positioning mode, and joint positioning mode of Uu interface positioning and SL positioning. Therefore, when the specific positioning mode cannot be determined, there may be situations where positioning information cannot be obtained, resulting in positioning failure.

### SUMMARY

The present disclosure provides a method and an apparatus for determining a positioning mode, a device, and storage medium, which can provide a positioning mode determination mechanism during the positioning process initiated by the first terminal, reducing the situation where the inaccurate positioning mode determination results in mismatch between the positioning mode and the positioning information, or results in that the positioning information cannot be obtained, and reducing the situation where positioning cannot be performed. The positioning information corresponding to the positioning mode can be determined, which can improve the accuracy of determining the positioning information.

Embodiments of an aspect of the present disclosure provide a method for determining a positioning mode. The method is performed by a first terminal, and includes:
in response to a positioning process initiated by the first terminal, performing at least one of:
determining a positioning mode corresponding to the positioning process; or
receiving a positioning mode corresponding to the positioning process sent by a network device.

Embodiments of another aspect of the present disclosure provide a method for determining a positioning mode. The method is performed by a second terminal, and includes:
receiving first request information sent by a first terminal, wherein the first request information is used to determine a positioning mode.

Embodiments of another aspect of the present disclosure provide a method for determining a positioning mode. The method is performed by an access and mobility management function (AMF), and includes:
receiving a positioning request sent by a first terminal; and
sending the positioning request to a location management function (LMF).

Embodiments of another aspect of the present disclosure provide a method for determining a positioning mode. The method is performed by an LMF, and includes:
receiving a positioning request sent by an AMF; and
in response to the positioning request, triggering a discovery process, and determining a positioning mode.

Embodiments of another aspect of the present disclosure provide a method for determining a positioning mode. The method includes:
receiving by an AMF, a positioning request sent by a first terminal;
sending by the AMF, the positioning request to a LMF;
receiving by the LMF, the positioning request;
in response to the positioning request, triggering by the LMF a discovery process, and determining a positioning mode.

Embodiments of another aspect of the present disclosure provide a method for determining a positioning mode. The method includes:
receiving by a network device, a positioning request sent by a first terminal; and
in response to the positioning request, triggering by the network device a discovery process, and determining a positioning mode.

Embodiments of yet another aspect of the present disclosure provide an apparatus for determining a positioning mode. The apparatus is arranged on a first terminal side, and includes:
in response to a positioning process initiated by a first terminal, performing at least one of:
a determining module, configured to determine a positioning mode corresponding to the positioning process; or
a receiving module, configured to receive a positioning mode corresponding to the positioning process sent by a network device.

Embodiments of yet another aspect of the present disclosure provide an apparatus for determining a positioning mode. The apparatus is arranged on a second terminal side, and includes:
a receiving module, configured to receive first request information sent by a first terminal, wherein the first request information is used to determine a positioning mode.

Embodiments of yet another aspect of the present disclosure provide an apparatus for determining a positioning mode. The apparatus is arranged on an AMF side, and includes:
a receiving module, configured to receive a positioning request sent by a first terminal; and
a sending module, configured to send the positioning request to a positioning management function entity (LMF).

Embodiments of yet another aspect of the present disclosure provide an apparatus for determining a positioning mode. The apparatus is arranged on an LMF side, and includes:
a receiving module, configured to receive a positioning request sent by an AMF; and
a determining module, configured to, in response to the positioning request, trigger a discovery process, and determine a positioning mode.

Embodiments of yet another aspect of the present disclosure provide an apparatus for determining a positioning mode. The apparatus includes:
an AMF, configured to receive a positioning request sent by a first terminal;
the AMF, further configured to send the positioning request to a LMF;
the LMF, configured to receive the positioning request;
the LMF, further configured to, in response to the positioning request, trigger a discovery proces s, and determine a positioning mode.

Embodiments of yet another aspect of the present disclosure provide an apparatus for determining a positioning mode. The apparatus includes:
a receiving module, configured for a network device to receive a positioning request sent by a first terminal; and
a determining module, configured for the network device to, in response to the positioning request, trigger a discovery process, and determine a positioning mode.

Embodiments of yet another aspect of the present disclosure provide a first terminal, including a processor and a memory, wherein the memory stores a computer program, and the processor is configured to execute the computer program stored in the memory, to cause the device to implement the method in embodiments of one aspect described above.

Embodiments of yet another aspect of the present disclosure provide a second terminal, including a processor and a memory, wherein the memory stores a computer program, and the processor is configured to execute the computer program stored in the memory, to cause the device to implement the method in embodiments of one aspect described above.

Embodiments of yet another aspect of the present disclosure provide an AMF, including a processor and a memory, wherein the memory stores a computer program, and the processor is configured to execute the computer program stored in the memory, to cause the device to implement the method in embodiments of one aspect described above.

Embodiments of yet another aspect of the present disclosure provide an LMF, including a processor and a memory, wherein the memory stores a computer program, and the processor is configured to execute the computer program stored in the memory, to cause the device to implement the method in embodiments of one aspect described above.

Embodiments of yet another aspect of the present disclosure provide a core network, including a processor and a memory, wherein the memory stores a computer program, and the processor is configured to execute the computer program stored in the memory, to cause the device to implement the method in embodiments of one aspect described above.

Embodiments of yet another aspect of the present disclosure provide a network device, including a processor and a memory, wherein the memory stores a computer program, and the processor is configured to execute the computer program stored in the memory, to cause the device to implement the method in embodiments of one aspect described above.

Embodiments of yet another aspect of the present disclosure provide a communication device, including a processor and an interface circuit;
the interface circuit is configured to receive code instructions and transmit the code instructions to the processor;
the processor is configured to run the code instructions to implement the method in embodiments of one aspect.

Embodiments of yet another aspect of the present disclosure provide a computer readable storage medium, stored with instructions, which when executed, cause the method in embodiments of one aspect to be implemented.

Embodiments of yet another aspect of the present disclosure provide a system for determining a positioning mode. The system includes:
a first terminal, configured to send a positioning request to an access and mobility management function (AMF);
the AMF, configured to receive the positioning request sent by the first terminal;
the AMF, configured to send the positioning request to a location management function (LMF);
the LMF, configured to receive the positioning request sent by the AMF;
the LMF, configured to, in response to the positioning request, trigger a discovery process, and determine a positioning mode.

In summary, in embodiments of the present disclosure, in response to the positioning process initiated by the first terminal, at least one of the following operations is performed: determining the positioning mode corresponding to the positioning process; or receiving the positioning mode corresponding to the positioning process sent by the network device. In embodiments of the present disclosure, a positioning mode determination mechanism can be provided, which can determine the positioning mode in response to the initiated positioning process, reducing the situation where positioning information cannot be obtained. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

### BRIEF DESCRIPTION OF THE DRAWINGS

The above and/or additional aspects and advantages of the present disclosure will become apparent and easily understood from the following description of the embodiments in conjunction with the accompanying drawings.
Fig. 1 is a schematic diagram of a method for determining a positioning mode provided in an embodiment of the present disclosure.
Fig. 2 is a schematic flowchart of a method for determining a positioning mode provided in an embodiment of the present disclosure.
Fig. 3 is a schematic flowchart of a method for determining a positioning mode provided in another embodiment of the present disclosure.
Fig. 4 is a schematic flowchart of a method for determining a positioning mode provided in another embodiment of the present disclosure.
Fig. 5 is a schematic flowchart of a method for determining a positioning mode provided in another embodiment of the present disclosure.
Fig. 6 is a schematic flowchart of a method for determining a positioning mode provided in another embodiment of the present disclosure.
Fig. 7 is a schematic flowchart of a method for determining a positioning mode provided in another embodiment of the present disclosure.
Fig. 8 is a schematic flowchart of a method for determining a positioning mode provided in another embodiment of the present disclosure.
Fig. 9 is a schematic flowchart of a method for determining a positioning mode provided in another embodiment of the present disclosure.
Fig. 10 is a schematic flowchart of a method for determining a positioning mode provided in another embodiment of the present disclosure.
Fig. 11 is a schematic flowchart of a method for determining a positioning mode provided in another embodiment of the present disclosure.
Fig. 12 is a schematic flowchart of a method for determining a positioning mode provided in another embodiment of the present disclosure.
Fig. 13 is a schematic flowchart of a method for determining a positioning mode provided in another embodiment of the present disclosure.
Fig. 14 is a schematic flowchart of a method for determining a positioning mode provided in another embodiment of the present disclosure.
Fig. 15 is a schematic diagram of interaction in a method for determining a positioning mode provided in another embodiment of the present disclosure.
Fig. 16 is a schematic flowchart of a method for determining a positioning mode provided in another embodiment of the present disclosure.
Fig. 17 is a schematic diagram of interaction in a method for determining a positioning mode provided in another embodiment of the present disclosure.
Fig. 18 is a schematic flowchart of a method for determining a positioning mode provided in another embodiment of the present disclosure.
Fig. 19 is a schematic flowchart of a method for determining a positioning mode provided in another embodiment of the present disclosure.
Fig. 20 is a schematic flowchart of a method for determining a positioning mode provided in another embodiment of the present disclosure.
Fig. 21 is a schematic flowchart of a method for determining a positioning mode provided in another embodiment of the present disclosure.
Fig. 22 is a schematic flowchart of a method for determining a positioning mode provided in another embodiment of the present disclosure.
Fig. 23 is a schematic diagram of interaction in a method for determining a positioning mode provided in another embodiment of the present disclosure.
Fig. 24 is a schematic flowchart of a method for determining a positioning mode provided in another embodiment of the present disclosure.
Fig. 25 is a schematic flowchart of a method for determining a positioning mode provided in another embodiment of the present disclosure.
Fig. 26 is a schematic diagram of interaction in a method for determining a positioning mode provided in another embodiment of the present disclosure.
Fig. 27 is a schematic flowchart of a method for determining a positioning mode provided in another embodiment of the present disclosure.
Fig. 28 is a schematic diagram of interaction in a method for determining a positioning mode provided in another embodiment of the present disclosure.
Fig. 29 is a schematic flowchart of a method for determining a positioning mode provided in another embodiment of the present disclosure.
Fig. 30 is a schematic flowchart of a method for determining a positioning mode provided in another embodiment of the present disclosure.
Fig. 31 is schematic flowchart of a method for determining a positioning mode provided in another embodiment of the present disclosure.
Fig. 32 is a block diagram of a system for determining a positioning mode provided in an embodiment of the present disclosure.
Fig. 33 is a block diagram of an apparatus for determining a positioning mode provided in an embodiment of the present disclosure.
Fig. 34 is a block diagram of an apparatus for determining a positioning mode provided in another embodiment of the present disclosure.
Fig. 35 is a block diagram of an apparatus for determining a positioning mode provided in another embodiment of the present disclosure.
Fig. 36 is a block diagram of an apparatus for determining a positioning mode provided in another embodiment of the present disclosure.
Fig. 37 is a block diagram of an apparatus for determining a positioning mode provided in another embodiment of the present disclosure.
Fig. 38 is a block diagram of an apparatus for determining a positioning mode provided in another embodiment of the present disclosure.
Fig. 39 is a block diagram of an apparatus for determining a positioning mode provided in another embodiment of the present disclosure.
Fig. 40 is a block diagram of a terminal provided in an embodiment of the present disclosure.
Fig. 41 is a block diagram of a network device provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "one" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although the terms first, second, third, etc. may be used to describe various information in embodiments of the present disclosure, these information should not be limited to these terms. These terms are only used to distinguish information of the same type from each other. For example, without departing from the scope of embodiments of the present disclosure, the first information may also be referred to as the second information, and similarly, the second information may also be referred to as the first information. Depending on the context, the word 'if' used here can be interpreted as 'when' or 'upon' or 'in response to determining'.

The network elements or network functions involved in embodiments of the present disclosure can be implemented as independent hardware devices or by software in the hardware devices, which are not limited in embodiments of the present disclosure.

Positioning based on sidelinks between user equipment (UEs) includes absolute positioning, relative positioning, and ranging. Absolute positioning determines the absolute coordinates of the UE, relative positioning determines the coordinates of the UE relative to a reference point, and ranging determines the distance and/or angle of the UE relative to a reference point. Ranging usually refers to ranging between only two UEs, but absolute positioning and relative positioning may involve multiple assistant UEs to participate in positioning.

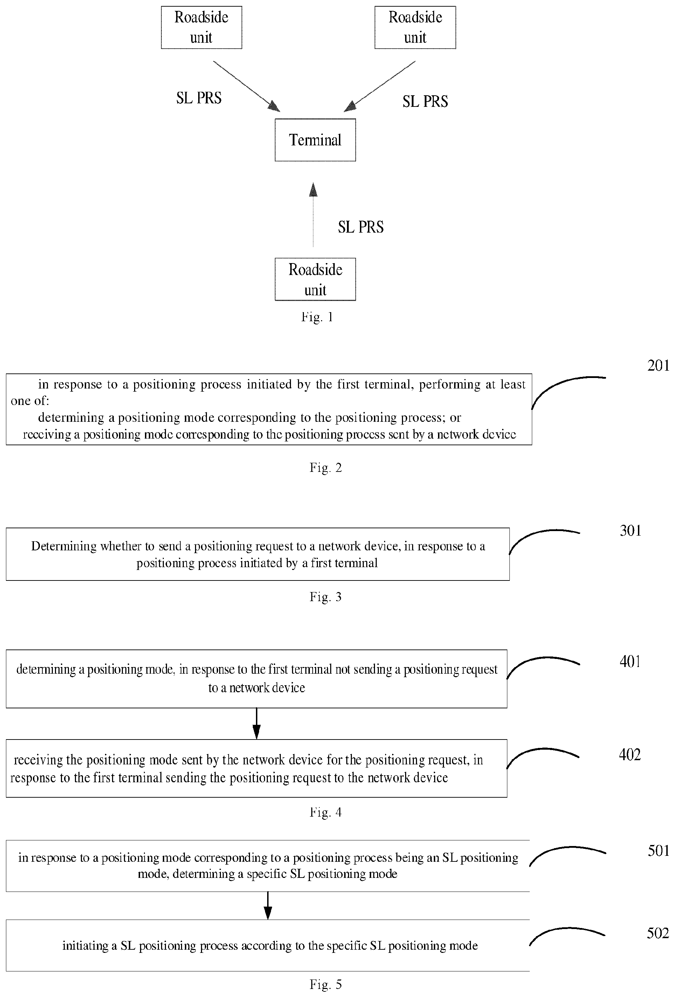

Fig. 1 shows an example schematic diagram of a method for determining a positioning mode provided in an embodiment of the present disclosure. As shown in Fig. 1, taking the positioning method based on downlink time difference of arrival (DL-TDOA) as an example, multiple Road Side Units (RSUs) can be set on the roadside, and each RSU can correspond to fixed position information, for example. UE can determine its specific position relative to RSU by measuring the positioning signals sent by multiple RSUs through sidelinks. The number of multiple RSUs may be greater than or equal to three, for example. For example, the positioning signal may include the position information of the RSU. The UE can measure the time difference of arrival of three positioning signals sent by three RSUs. Based on the time difference of arrival of these three positioning signals and the position information of each RSU, the UE can determine its position information or its position information relative to a certain RSU.

In addition to DL-TDOA, positioning schemes also include Uplink time difference of arrival (UL-TDOA), Multiple round trip time (RTT), angle of arrival (AOA) or angle of departure (AOD), carrier phase positioning, and so on. If the positioning result is not converted into absolute position coordinates based on Global Positioning System (GPS) coordinates or other absolute position information of the RSU, then the positioning result is relative positioning. On the contrary, it is the absolute positioning. The RSU that participates in relative or absolute positioning is the positioning assistant UE.

In an embodiment of the present disclosure, if the positioning involves only two UEs, they are positioning assistant UEs of each other.

In an embodiment of the present disclosure, there are different types of positioning assistant UEs, such as RSU type positioning assistant UEs. The RSU type positioning assistant UE belongs to an infrastructure that can provide positioning services by collaborating with other RSUs. For example, a regular UE can also serve as a positioning assistant UE, making it difficult to assist in providing positioning services together with other UEs. In addition, some positioning assistant UEs have GPS and other position information, which can assist other UEs in absolute positioning, but some other positioning assistant UEs may not have GPS and other position information.

In an embodiment of the present disclosure, an assistant UE is used for positioning assistance. When there is no SL link between two UEs, in order to perform SL positioning between these two UEs, the assistance of the assistant UE is required. By measuring the SL positioning results between these two UEs and the positioning assistant UE respectively, the SL positioning result between these two UEs is determined.

For the positioning request initiated by the UE, Uu interface positioning, SL positioning, or joint positioning of Uu interface positioning and SL positioning can be chosen.

In an embodiment of the present disclosure, for example, in order to measure the distance between two UEs, the distance can be directly measured through SL-round trip time (RTT), or the absolute position of one UE can be calculated first through SL-TDOA and/or SL-AOA, and then the relative distance can be calculated based on the absolute positions of the two UEs.

In an embodiment of the present disclosure, for another example, in order to measure the absolute position of one UE, the relative position of two UEs can be measured using SL-RTT, and the absolute position of the target UE can be calculated based on the absolute position of one of the UEs. Alternatively, the absolute position of the target UE can be calculated using SL-TDOA or the Uu interface positioning method.

Therefore, if the positioning method is blindly selected, there is a risk that there are no available assistant UEs around the target UE to support the positioning method, resulting in positioning failure. That is, when the specific positioning mode cannot be determined, positioning information cannot be obtained, leading to positioning failure.

The following provides a detailed description of a method and an apparatus for determining a positioning mode, a device and a storage medium provided in embodiments of the present disclosure with reference to the accompanying drawings.

Fig. 2 is a schematic flowchart of a method for determining a positioning mode provided in an embodiment of the present disclosure. The method is performed by a first terminal. As shown in Fig. 2, the method may include the following steps.

Step 201, in response to a positioning process initiated by the first terminal, performing at least one of:
determining a positioning mode corresponding to the positioning process; or
receiving a positioning mode corresponding to the positioning process sent by a network device.

It should be noted that in an embodiment of the present disclosure, the terminal may be a device that provides voice and/or data connectivity to the user. The terminal can communicate with one or more core networks via a Radio Access Network (RAN), and may be an IoT terminal such as a sensor device, a mobile phone (also known as "cellular" phone), and a computer with IoT terminals. For example, the terminal may be a fixed, portable, pocket sized, handheld, computer built-in, or vehicle mounted device, for example, a station (STA), a subscriber unit, a subscriber station, a mobile station, a mobile, a remote station, an access point, a remote terminal, an access terminal, a user terminal, or a user agent. Alternatively, the terminal may also be an unmanned aerial vehicle device. Alternatively, the terminal may also be a vehicle mounted device, such as a wireless communication enabled onboard computer or a wireless terminal connected to an external onboard computer. Alternatively, the terminal may also be a roadside device, such as a street lamp, signal lights, or other roadside devices with wireless communication capabilities.

In an embodiment of the present disclosure, the first terminal may be, for example, the terminal that initiates the positioning process. The first terminal may be an RSU, for example. The first terminal may be, for example, the terminal being positioned.

In an embodiment of the present disclosure, the method further includes:
in response to the positioning process initiated by the first terminal, determining whether to send a positioning request to a network device.

In an embodiment of the present disclosure, determining whether to send the positioning request to the network device includes at least one of:
not sending the positioning request to the network device in a case where the first terminal is outside a coverage of the network device, and the first terminal supports a sidelink (SL) positioning mode;
sending the positioning request to the network device in a case where the first terminal is within a coverage of the network device, and the first terminal supports a Uu interface positioning mode;
not sending the positioning request to the network device in response to positioning information requested by the positioning request belonging to first preset positioning information, in a case where the first terminal is within a coverage of the network device, and the first terminal supports a SL positioning mode, wherein the first preset positioning information comprises at least one of distance information, angle information or relative position information;
sending the positioning request to the network device in response to positioning information requested by the positioning request being absolute position information and the first terminal supporting a Uu interface positioning mode, in a case where the first terminal is within a coverage of the network device;
determining whether to send the positioning request to the network device according to a configured strategy, in a case where the first terminal is within a coverage of the network device, wherein the configured strategy includes at least one of a network configured strategy or a preconfigured strategy;
sending the positioning request to the network device, in a case where the first terminal is within a coverage of the network device, and the first terminal does not support a SL positioning mode; or
not sending the positioning request to the network device, in a case where the first terminal is within a coverage of the network device through a SL relay, and the first terminal supports a SL positioning mode.

In an embodiment of the present disclosure, the first preset positioning information refers to the positioning information used by the first terminal to determine whether to send the positioning request to the network device. The "first" in the first preset positioning information is only used to distinguish it from other preset positioning information and does not specifically refer to fixed preset positioning information.

In an embodiment of the present disclosure, the method further includes:
determining the positioning mode, in response to the first terminal not sending the positioning request to the network device;
receiving the positioning mode sent by the network device for the positioning request, in response to the first terminal sending the positioning request to the network device.

In an embodiment of the present disclosure, determining the positioning mode corresponding to the positioning process includes at least one of:
determining the positioning mode corresponding to the positioning process as a SL positioning mode, in a case where the first terminal is currently outside a coverage of the network device, and the first terminal supports the SL positioning mode;
determining the positioning mode corresponding to the positioning process as a Uu interface positioning mode, in a case where the first terminal is currently within a coverage of the network device, and the first terminal supports the Uu interface positioning mode;
determining the positioning mode corresponding to the positioning process as a SL positioning mode, in a case where the first terminal is within a coverage of the network device through a SL relay, and the first terminal supports the SL positioning mode;
determining the positioning mode corresponding to the positioning process as a SL positioning mode, in a case where positioning information requested by the first terminal belongs to second preset positioning information, and the first terminal supports the SL positioning mode, wherein the second preset positioning information includes at least one of distance information, angle information, or relative position information;
determining the positioning mode corresponding to the positioning process as a Uu interface positioning mode, in a case where the first terminal supports only the Uu interface positioning mode;
determining the positioning mode corresponding to the positioning process as a SL positioning mode, in a case where the first terminal supports only the SL positioning mode; or
determining the positioning mode corresponding to the positioning process as a joint positioning mode of a SL positioning mode and a Uu interface positioning mode, in a case where a quality of service (QoS) condition of the positioning request sent to the network device meets a threshold condition, and the first terminal supports the SL positioning mode and the Uu interface positioning mode.

In an embodiment of the present disclosure, the second preset positioning information refers to the positioning information used by the first terminal when determining the positioning mode corresponding to the positioning process. The "second" in the second preset positioning information is only used to distinguish it from other preset positioning information and does not specifically refer to fixed preset positioning information.

For example, in an embodiment of the present disclosure, after determining the positioning mode corresponding to the positioning process, the method further includes:
in response to the positioning mode corresponding to the positioning process being the SL positioning mode, determining a specific SL positioning mode; and
initiating a SL positioning process according to the specific SL positioning mode.

Further, in an embodiment of the present disclosure, determining the specific SL positioning mode includes:
determining the specific SL positioning mode through a positioning protocol layer of the first terminal, wherein the positioning protocol layer includes at least one of a sidelink positioning protocol (SLPP) layer, a ranging and sidelink positioning protocol (RSPP) layer, or an LTE positioning protocol (LPP) layer.

Further, in an embodiment of the present disclosure, the method further includes:
sending the positioning request by an upper layer of the first terminal to the positioning protocol layer of the first terminal, wherein a level of the upper layer of the first terminal is higher than a level of the positioning protocol layer.

Further, in an embodiment of the present disclosure, the positioning request includes at least one of:
a positioning type; or
a positioning accuracy.

For example, in an embodiment of the present disclosure, the positioning type does not specifically refer to a fixed positioning type. The positioning type may include, for example, the distance and/or angle of the first terminal relative to a certain terminal or a group of terminals; absolute position; and relative position relative to a certain terminal or a group of terminals.

For example, in an embodiment of the present disclosure, the positioning accuracy includes but is not limited to distance accuracy, angle accuracy, relative position accuracy, and absolute position accuracy. The positioning accuracy does not specifically refer to a fixed accuracy. For example, positioning accuracy may be distance accuracy or angle accuracy. The distance accuracy or position accuracy may be, for example, 10cm, 0.5m, 1m, 3m, or 5m. The angle accuracy may be, for example, 5 degrees, or 10 degrees, or 20 degrees.

Further, in an embodiment of the present disclosure, the positioning accuracy may be distinguished into vertical and horizontal accuracy requirements, for example.

Further, in an embodiment of the present disclosure, the method further includes:
sending proximity terminal information by the upper layer of the first terminal to the positioning protocol layer of the first terminal when the upper layer sends the positioning request to the positioning protocol layer.

In an embodiment of the present disclosure, the first terminal can discover proximity terminals through a discovery process. The discovery process includes but is not limited to the Proximity Services (ProSe) discovery process or V2X discovery process.

Further, in an embodiment of the present disclosure, the proximity terminal information includes at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

Further, in an embodiment of the present disclosure, the signal quality information includes but is not limited to Reference Signal Receiving Power (RSRP), Reference Signal Receiving Quality (RSRQ), Received Signal Strength Indicator (RSSI), and Signal to Interference plus Noise Ratio (SINR).

In an embodiment of the present disclosure, information of roles supported by the proximity terminal includes but is not limited to assistant UE, anchor UE, and location server UE.

In an embodiment of the present disclosure, information of positioning modes supported by the proximity terminal includes but is not limited to SL-RTT, SL-TOA, SL-AOA and Uu positioning.

Further, in an embodiment of the present disclosure, the method further includes:
sending proximity terminal information by any of a PC5-data link (PC5-D) layer, a proximity service (ProSe) layer, or a V2X layer of the first terminal to the positioning protocol layer of the first terminal.

In an embodiment of the present disclosure, any one of the PC5-D layer, ProSe layer, and V2X layer can send the discovery result to the SLPP layer after executing each discovery process, or any one of the PC5-D layer, ProSe layer, and V2X layer can send the discovery result to the RSPP layer after executing each discovery process, or any one of the PC5-D layer, ProSe layer, and V2X layer can send the discovery result to the LPP layer after executing each discovery process.

For example, in an embodiment of the present disclosure, the upper layer of the first terminal may configure any of the PC5-D layer, ProSe layer, and V2X layer to execute the discovery process periodically.

In an embodiment of the present disclosure, determining the specific SL positioning mode includes:
triggering a discovery process; and
determining the specific SL positioning mode according to a discovery result corresponding to the discovery process.

For example, in an embodiment of the present disclosure, triggering the discovery process includes:
triggering the discovery process, in response to the positioning protocol layer of the first terminal receiving the positioning request sent by the upper layer of the first terminal.

Further, in an embodiment of the present disclosure, the discovery process includes at least one of:
a ProSe discovery process; or
a V2X discovery process.

In an embodiment of the present disclosure, the positioning protocol layer may instruct the ProSe layer or V2X layer to initiate the discovery process, and may also impose certain restrictions on the UE to be discovered. The positioning protocol layer includes at least one of the SLPP layer, the RSPP layer, or the LPP layer.

In an embodiment of the present disclosure, the ProSe layer or V2X layer may inform the SLPP layer or RSPP layer of the discovery results after completing the discovery process.

Further, in an embodiment of the present disclosure, a trigger condition for the discovery process includes at least one of:
the upper layer of the first terminal not providing proximity terminal information of the first terminal;
the proximity terminal information provided by the upper layer not meeting information requirements;
the proximity terminal information provided by the upper layer having expired;
the positioning protocol layer having no available proximity terminal information, wherein the positioning protocol layer includes at least one of the SLPP layer, the RSPP layer, or the LPP layer;
a positioning type requested by the positioning request from the upper layer being a relative position type;
a positioning type requested by the positioning request from the upper layer being an absolute position type;
a positioning type requested being a relative position type and/or an absolute position type; or
the first terminal currently being within a coverage of the network device.

Further, in an embodiment of the present disclosure, the upper layer includes at least one of:
an application layer;
a Non-Access Stratum (NAS) layer;
a PC5-signaling transmission (PC5-S) layer; or
a location service (LCS) layer.

In an embodiment of the present disclosure, triggering the discovery process includes:
specifying to discover a terminal of a specific type, when triggering the discovery process.

Further, in an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

In an embodiment of the present disclosure, determining the specific SL positioning mode includes:
in response to positioning information requested by the positioning request belonging to third preset positioning information, determining the specific SL positioning mode as a SL-RTT positioning mode, wherein the third preset positioning information includes at least one of distance information or angle information.

In an embodiment of the present disclosure, the third preset positioning information refers to the positioning information used by the first terminal when determining the specific SL positioning mode based on the positioning request. The "third" in the third preset positioning information is only used to distinguish it from other preset positioning information and does not specifically refer to fixed preset positioning information.

In an embodiment of the present disclosure, the positioning request may be, for example, a positioning request received by the positioning protocol layer. The positioning protocol layer includes at least one of the SLPP layer, the RSPP layer, or the LPP layer.

For example, in an embodiment of the present disclosure, the positioning request may be a request received by a layer with the capability of determining the positioning mode.

In an embodiment of the present disclosure, determining the specific SL positioning mode includes:
in response to a positioning accuracy corresponding to a positioning request satisfying an accuracy condition, determining the specific SL positioning mode as a SL-TDOA positioning mode and/or a SL-AOA positioning mode.

For example, in an embodiment of the present disclosure, the positioning accuracy includes but is not limited to distance accuracy, angle accuracy, relative position accuracy, and absolute position accuracy. For example, when distance or position accuracy is required to be higher than 1m, or angle accuracy is required to be higher than 10 degrees, the SL-TDOA mode or the SL-AOA mode can be used.

In an embodiment of the present disclosure, the method includes:
determining the accuracy condition according to condition configuration sent by a network device; or
determining the accuracy condition according to preset condition configuration.

Further, in an embodiment of the present disclosure, the positioning type corresponding to the positioning request includes a relative position type and/or an absolute position type.

Further, in an embodiment of the present disclosure, the first terminal has a capability of determining a positioning mode or the first terminal itself supports determining a positioning mode.

Further, in an embodiment of the present disclosure, the method further includes:
in a case where the first terminal does not have a capability of determining a positioning mode or the first terminal itself does not support determining a positioning mode, sending first request information to a second terminal, wherein the second terminal is a proximity terminal having a capability of determining a positioning mode.

Further, in an embodiment of the present disclosure, the first request information includes at least one of:
positioning request related information; or
proximity terminal information of the first terminal.

Further, in an embodiment of the present disclosure, the positioning request related information includes, for example, the terminal to be requested, the position type, and the accuracy requirement. The position type includes but is not limited to distance type, angle type, relative position type, and absolute position type.

Further, in an embodiment of the present disclosure, the proximity terminal information of the first terminal includes at least one of:
device identification information of the proximity terminal;
signal quality information of the SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

In an embodiment of the present disclosure, the second terminal may be a proximity terminal having a capability of determining a positioning mode. The second terminal may be, for example, an SL positioning server UE.

Further, in an embodiment of the present disclosure, after sending the request information to the second terminal, the method further includes:
receiving a positioning mode sent by the second terminal for the first request information.

For example, in an embodiment of the present disclosure, the positioning mode includes but is not limited to RTT, TDOA, AOA, etc. Moreover, the second terminal can also send a list of terminals participating in the positioning mode.

For example, in an embodiment of the present disclosure, the method further includes:
sending a positioning request to an access and mobility management function (AMF).

Further, in an embodiment of the present disclosure, after the first terminal sends the positioning request to the AMF, the AMF can send the positioning request to the LMF. The LMF can receive the positioning request sent by AMF; and in response to the positioning request, trigger the discovery process and determine the location mode.

In summary, in embodiments of the present disclosure, in response to the positioning process initiated by the first terminal, at least one of the following operations is performed: determining the positioning mode corresponding to the positioning process; or receiving the positioning mode corresponding to the positioning process sent by the network device. In embodiments of the present disclosure, a positioning mode determination mechanism can be provided, which can determine the positioning mode in response to the initiated positioning process, reducing the situation where positioning information cannot be obtained. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 3 is a schematic flowchart of a method for determining a positioning mode provided in an embodiment of the present disclosure. The method is performed by a first terminal. As shown in Fig. 3, the method may include the following steps.

Step 301, determining whether to send a positioning request to a network device, in response to a positioning process initiated by the first terminal.

In an embodiment of the present disclosure, determining whether to send the positioning request to the network device includes at least one of:
not sending the positioning request to the network device in a case where the first terminal is outside a coverage of the network device, and the first terminal supports a sidelink (SL) positioning mode;
sending the positioning request to the network device in a case where the first terminal is within a coverage of the network device, and the first terminal supports a Uu interface positioning mode;
not sending the positioning request to the network device in response to positioning information requested by the positioning request belonging to first preset positioning information, in a case where the first terminal is within a coverage of the network device, and the first terminal supports a SL positioning mode, wherein the first preset positioning information includes at least one of distance information, angle information or relative position information;
sending the positioning request to the network device in response to positioning information requested by the positioning request being absolute position information and the first terminal supporting a Uu interface positioning mode, in a case where the first terminal is within a coverage of the network device;
determining whether to send the positioning request to the network device according to a configured strategy, in a case where the first terminal is within a coverage of the network device, wherein the configured strategy includes at least one of a network configured strategy or a preconfigured strategy;
sending the positioning request to the network device, in a case where the first terminal is within a coverage of the network device, and the first terminal does not support a SL positioning mode; or
not sending the positioning request to the network device, in a case where the first terminal is within a coverage of the network device through a SL relay, and the first terminal supports a SL positioning mode.

In an embodiment of the present disclosure, the method further includes:
determining the positioning mode, in response to the first terminal not sending the positioning request to the network device;
receiving the positioning mode sent by the network device for the positioning request, in response to the first terminal sending the positioning request to the network device.

In summary, in embodiments of the present disclosure, it is determined whether to send the positioning request to the network device in response to the positioning process initiated by the first terminal. In embodiments of the present disclosure, a positioning mode determination mechanism can be provided, which can determine the positioning mode in response to the initiated positioning process, reducing the situation where positioning information cannot be obtained. Embodiments of the present disclosure specifically disclose whether to send the positioning request to the network device to receive the positioning mode sent by the network device. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 4 is a schematic flowchart of a method for determining a positioning mode provided in an embodiment of the present disclosure. The method is performed by a first terminal. As shown in Fig. 4, the method may include the following steps.

Step 401, determining a positioning mode, in response to the first terminal not sending a positioning request to a network device;

Step 402, receiving the positioning mode sent by the network device for the positioning request, in response to the first terminal sending the positioning request to the network device.

In an embodiment of the present disclosure, one of step 401 and step 402 is chosen to be executed, that is, step 401 may not be executed by the first terminal when the first terminal executes step 402, and step 402 may not be executed by the first terminal when the first terminal executes step 401.

**In** an embodiment of the present disclosure, the first terminal determining the positioning mode includes at least one of:
determining the positioning mode corresponding to the positioning process as a SL positioning mode, in a case where the first terminal is currently outside a coverage of the network device, and the first terminal supports the SL positioning mode;
determining the positioning mode corresponding to the positioning process as a Uu interface positioning mode, in a case where the first terminal is currently within a coverage of the network device, and the first terminal supports the Uu interface positioning mode;
determining the positioning mode corresponding to the positioning process as a SL positioning mode, in a case where the first terminal is within a coverage of the network device through a SL relay, and the first terminal supports the SL positioning mode;
determining the positioning mode corresponding to the positioning process as a SL positioning mode, in a case where positioning information requested by the first terminal belongs to second preset positioning information, and the first terminal supports the SL positioning mode, wherein the second preset positioning information includes at least one of distance information, angle information, or relative position information;
determining the positioning mode corresponding to the positioning process as a Uu interface positioning mode, in a case where the first terminal supports only the Uu interface positioning mode;
determining the positioning mode corresponding to the positioning process as a SL positioning mode, in a case where the first terminal supports only the SL positioning mode; or
determining the positioning mode corresponding to the positioning process as a joint positioning mode of a SL positioning mode and a Uu interface positioning mode, in a case where a quality of service (QoS) condition of the positioning request sent to the network device meets a threshold condition, and the first terminal supports the SL positioning mode and the Uu interface positioning mode.

In summary, in embodiments of the present disclosure, the positioning mode is determined in response to the first terminal not sending the positioning request to the network device; the positioning mode sent by the network device for the positioning request is received in response to the first terminal sending the positioning request to the network device. In embodiments of the present disclosure, a positioning mode determination mechanism can be provided, which can determine the positioning mode in response to the initiated positioning process, reducing the situation where positioning information cannot be obtained. Embodiments of the present disclosure specifically disclose a solution in which the first terminal determines the positioning mode or receives the positioning mode sent by the network device for the positioning request. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 5 is a schematic flowchart of a method for determining a positioning mode provided in an embodiment of the present disclosure. The method is performed by a first terminal. As shown in Fig. 5, the method may include the following steps:
Step 501, in response to a positioning mode corresponding to a positioning process being an SL positioning mode, determining a specific SL positioning mode;
Step 502, initiating a SL positioning process according to the specific SL positioning mode.

In an embodiment of the present disclosure, the specific SL positioning mode may be determined through a positioning protocol layer of the first terminal, wherein the positioning protocol layer includes at least one of a sidelink positioning protocol (SLPP) layer, a ranging and sidelink positioning protocol (RSPP) layer, or an LTE positioning protocol (LPP) layer.

In an embodiment of the present disclosure, an upper layer of the first terminal sends the positioning request to the positioning protocol layer of the first terminal, wherein a level of the upper layer of the first terminal is higher than a level of the positioning protocol layer.

In an embodiment of the present disclosure, the positioning request includes at least one of:
a positioning type; or
a positioning accuracy.

For example, in an embodiment of the present disclosure, the positioning type does not specifically refer to a fixed positioning type. The positioning type may include, for example, the distance and/or angle of the first terminal relative to a certain terminal or a group of terminals; absolute position; a relative position relative to a certain terminal or a group of terminals.

For example, in an embodiment of the present disclosure, the positioning accuracy includes but is not limited to distance accuracy, angle accuracy, relative position accuracy, and absolute position accuracy. The positioning accuracy does not specifically refer to a fixed accuracy. For example, the positioning accuracy may be distance accuracy or angle accuracy. The distance accuracy or position accuracy may be, for example, 10cm, 0.5m, 1m, 3m, or 5m. The angle accuracy may be, for example, 5 degrees, or 10 degrees, or 20 degrees.

Further, in an embodiment of the present disclosure, the positioning accuracy may be distinguished into vertical and horizontal accuracy requirements, for example.

For example, in an embodiment of the present disclosure, the method further includes:
sending proximity terminal information by an upper layer of the first terminal to the positioning protocol layer of the first terminal when the upper layer sends the positioning request to the positioning protocol layer.

For example, in an embodiment of the present disclosure, the proximity terminal information includes at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

Further, in an embodiment of the present disclosure, the signal quality information includes but is not limited to Reference Signal Receiving Power (RSRP), Reference Signal Receiving Quality (RSRQ), Received Signal Strength Indicator (RSSI), and Signal to Interference plus Noise Ratio (SINR).

In an embodiment of the present disclosure, information of roles supported by the proximity terminal includes but is not limited to assistant UE, anchor UE, and location server UE.

In an embodiment of the present disclosure, information of positioning modes supported by the proximity terminal includes but is not limited to SL-RTT, SL-TOA, SL-AOA and Uu positioning.

Further, in an embodiment of the present disclosure, the method further includes:
sending proximity terminal information by any of a PC5-data link (PC5-D) layer, a proximity service (ProSe) layer, or a V2X layer of the first terminal to the positioning protocol layer of the first terminal.

In an embodiment of the present disclosure, any one of the PC5-D layer, ProSe layer, and V2X layer can send the discovery result to the SLPP layer after executing each discovery process, or any one of the PC5-D layer, ProSe layer, and V2X layer can send the discovery result to the RSPP layer after executing each discovery process, or any one of the PC5-D layer, ProSe layer, and V2X layer can send the discovery result to the LPP layer after executing each discovery process.

For example, in an embodiment of the present disclosure, the upper layer of the first terminal may configure any of the PC5-D layer, ProSe layer, and V2X layer to execute the discovery process periodically.

In an embodiment of the present disclosure, determining the specific SL positioning mode includes:
triggering a discovery process; and
determining the specific SL positioning mode according to a discovery result corresponding to the discovery process.

For example, in an embodiment of the present disclosure, triggering the discovery process includes:
triggering the discovery process, in response to the positioning protocol layer of the first terminal receiving the positioning request sent by the upper layer of the first terminal.

Further, in an embodiment of the present disclosure, the discovery process includes at least one of:
a ProSe discovery process; or
a V2X discovery process.

In an embodiment of the present disclosure, the positioning protocol layer may instruct the ProSe layer or V2X layer to initiate the discovery process, and may also impose certain restrictions on the UE to be discovered. The positioning protocol layer includes at least one of the SLPP layer, the RSPP layer, or the LPP layer.

In an embodiment of the present disclosure, the ProSe layer or V2X layer may inform the SLPP layer or RSPP layer of the discovery results after completing the discovery process.

Further, in an embodiment of the present disclosure, a trigger condition for the discovery process includes at least one of:
the upper layer of the first terminal not providing proximity terminal information of the first terminal;
the proximity terminal information provided by the upper layer not meeting information requirements;
the proximity terminal information provided by the upper layer having expired;
the positioning protocol layer having no available proximity terminal information, wherein the positioning protocol layer includes at least one of the SLPP layer, the RSPP layer, or the LPP layer;
a positioning type requested by the positioning request from the upper layer being a relative position type;
a positioning type requested by the positioning request from the upper layer being an absolute position type;
a positioning type requested being a relative position type and/or an absolute position type; or
the first terminal currently being within a coverage of the network device.

Further, in an embodiment of the present disclosure, the upper layer includes at least one of:
an application layer;
a Non-Access Stratum (NAS) layer;
a PC5-signaling transmission (PC5-S) layer; or
a location service (LCS) layer.
In an embodiment of the present disclosure, triggering the discovery process includes:
specifying to discover a terminal of a specific type, when triggering the discovery process.

Further, in an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.
In an embodiment of the present disclosure, determining the specific SL positioning mode includes:
in response to positioning information requested by the positioning request belonging to third preset positioning information, determining the specific SL positioning mode as a SL-RTT positioning mode, wherein the third preset positioning information includes at least one of distance information or angle information.

In an embodiment of the present disclosure, the positioning request may be, for example, a positioning request received by the positioning protocol layer. The positioning protocol layer includes at least one of the SLPP layer, the RSPP layer, or the LPP layer.

For example, in an embodiment of the present disclosure, the positioning request may be a request received by a layer with the capability of determining the positioning mode.

In an embodiment of the present disclosure, determining the specific SL positioning mode includes:
in response to a positioning accuracy corresponding to a positioning request satisfying an accuracy condition, determining the specific SL positioning mode as a SL-TDOA positioning mode and/or a SL-AOA positioning mode.

For example, in an embodiment of the present disclosure, the positioning accuracy includes but is not limited to distance accuracy, angle accuracy, relative position accuracy, and absolute position accuracy. For example, when distance or position accuracy is required to be higher than 1m, or angle accuracy is required to be higher than 10 degrees, the SL-TDOA mode or the SL-AOA mode can be used.

In an embodiment of the present disclosure, the method includes:
determining the accuracy condition according to condition configuration sent by a network device; or
determining the accuracy condition according to preset condition configuration.

Further, in an embodiment of the present disclosure, the positioning type corresponding to the positioning request includes a relative position type and/or an absolute position type.

Further, in an embodiment of the present disclosure, the first terminal has a capability of determining a positioning mode or the first terminal itself supports determining a positioning mode.

Further, in an embodiment of the present disclosure, the method further includes:
in a case where the first terminal does not have a capability of determining a positioning mode or the first terminal itself does not support determining a positioning mode, sending first request information to a second terminal, wherein the second terminal is a proximity terminal having a capability of determining a positioning mode.

Further, in an embodiment of the present disclosure, the first request information includes at least one of:
positioning request related information; or
proximity terminal information of the first terminal.

Further, in an embodiment of the present disclosure, after sending the request information to the second terminal, the method further includes:
receiving a positioning mode sent by the second terminal for the first request information.

For example, in an embodiment of the present disclosure, the positioning mode includes but is not limited to RTT, TDOA, AOA, etc. Moreover, the second terminal can also send a list of terminals participating in the positioning mode.

In summary, in embodiments of the present disclosure, in response to the positioning process initiated by the first terminal, and the positioning mode corresponding to the positioning process being the SL positioning mode, the specific SL positioning mode is determined, and the SL positioning process is initiated according to the specific SL positioning mode. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme in which the specific SL positioning mode is determined after determining the SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

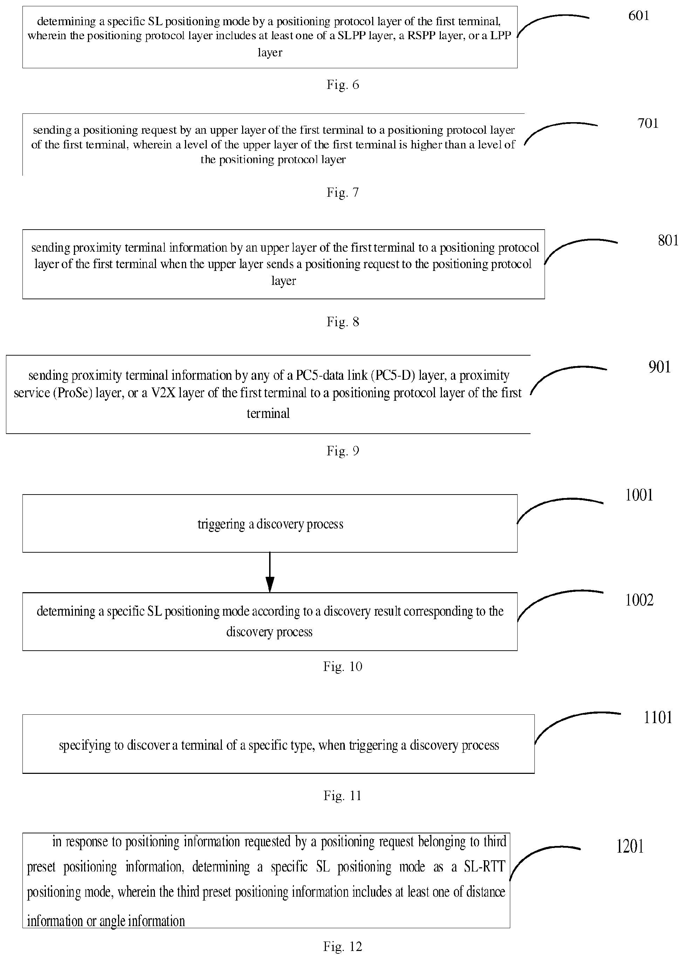

Fig. 6 is a schematic flowchart of a method for determining a positioning mode provided in an embodiment of the present disclosure. The method is performed by a first terminal. As shown in Fig. 6, the method may include the following steps.

Step 601, determining a specific SL positioning mode by a positioning protocol layer of the first terminal, wherein the positioning protocol layer includes at least one of a SLPP layer, a RSPP layer, or a LPP layer.

For example, in an embodiment of the present disclosure, the upper layer of the first terminal sends the positioning request to the positioning protocol layer of the first terminal, wherein a level of the upper layer of the first terminal is higher than a level of the positioning protocol layer.

Further, in an embodiment of the present disclosure, the positioning request includes at least one of:
a positioning type; or
a positioning accuracy.

For example, in an embodiment of the present disclosure, the positioning type does not specifically refer to a fixed positioning type. The positioning type may include, for example, the distance and/or angle of the first terminal relative to a certain terminal or a group of terminals; absolute position; and relative position relative to a certain terminal or a group of terminals.

For example, in an embodiment of the present disclosure, the positioning accuracy includes but is not limited to distance accuracy, angle accuracy, relative position accuracy, and absolute position accuracy. The positioning accuracy does not specifically refer to a fixed accuracy. For example, positioning accuracy may be distance accuracy or angle accuracy. The distance accuracy or position accuracy may be, for example, 10cm, 0.5m, 1m, 3m, or 5m. The angle accuracy may be, for example, 5 degrees, or 10 degrees, or 20 degrees.

Further, in an embodiment of the present disclosure, the positioning accuracy may be distinguished into vertical and horizontal accuracy requirements, for example.

Further, in an embodiment of the present disclosure, the method further includes:
sending proximity terminal information by the upper layer of the first terminal to the positioning protocol layer of the first terminal when the upper layer sends the positioning request to the positioning protocol layer.

In an embodiment of the present disclosure, the first terminal can discover proximity terminals through a discovery process. The discovery process includes but is not limited to the Proximity Services (ProSe) discovery process or V2X discovery process.

Further, in an embodiment of the present disclosure, the proximity terminal information includes at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

Further, in an embodiment of the present disclosure, the signal quality information includes but is not limited to Reference Signal Receiving Power (RSRP), Reference Signal Receiving Quality (RSRQ), Received Signal Strength Indicator (RSSI), and Signal to Interference plus Noise Ratio (SINR).

In an embodiment of the present disclosure, information of roles supported by the proximity terminal includes but is not limited to assistant UE, anchor UE, and location server UE.

In an embodiment of the present disclosure, information of positioning modes supported by the proximity terminal includes but is not limited to SL-RTT, SL-TOA, SL-AOA and Uu positioning.

Further, in an embodiment of the present disclosure, the method further includes:
sending proximity terminal information by any of a PC5-data link (PC5-D) layer, a proximity service (ProSe) layer, or a V2X layer of the first terminal to the positioning protocol layer of the first terminal.

In an embodiment of the present disclosure, any one of the PC5-D layer, ProSe layer, and V2X layer can send the discovery result to the SLPP layer after executing each discovery process, or any one of the PC5-D layer, ProSe layer, and V2X layer can send the discovery result to the RSPP layer after executing each discovery process, or any one of the PC5-D layer, ProSe layer, and V2X layer can send the discovery result to the LPP layer after executing each discovery process.

For example, in an embodiment of the present disclosure, the upper layer of the first terminal may configure any of the PC5-D layer, ProSe layer, and V2X layer to execute the discovery process periodically.

In an embodiment of the present disclosure, the upper layer includes at least one of:
an application layer;
a Non-Access Stratum (NAS) layer;
a PC5-signaling transmission (PC5-S) layer; or
a location service (LCS) layer.

In summary, in embodiments of the present disclosure, the specific SL positioning mode is determined by the positioning protocol layer of the first terminal, wherein the positioning protocol layer includes at least one of the SLPP layer, the RSPP layer or the LPP layer. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme for determining the specific SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 7 is a schematic flowchart of a method for determining a positioning mode provided in an embodiment of the present disclosure. The method is performed by a first terminal. As shown in Fig. 7, the method may include the following steps.

Step 701, sending a positioning request by an upper layer of the first terminal to a positioning protocol layer of the first terminal, wherein a level of the upper layer of the first terminal is higher than a level of the positioning protocol layer.

In an embodiment of the present disclosure, the positioning protocol layer of the first terminal can determine the positioning mode. The positioning protocol layer includes at least one of the SLPP layer, the RSPP layer or the LPP layer.

Further, in an embodiment of the present disclosure, the positioning request includes at least one of:
a positioning type; or
a positioning accuracy.

For example, in an embodiment of the present disclosure, the positioning type does not specifically refer to a fixed positioning type. The positioning type may include, for example, the distance and/or angle of the first terminal relative to a certain terminal or a group of terminals; absolute position; and relative position relative to a certain terminal or a group of terminals.

For example, in an embodiment of the present disclosure, the positioning accuracy includes but is not limited to distance accuracy, angle accuracy, relative position accuracy, and absolute position accuracy. The positioning accuracy does not specifically refer to a fixed accuracy. For example, positioning accuracy may be distance accuracy or angle accuracy. The distance accuracy or position accuracy may be, for example, 10cm, 0.5m, 1m, 3m, or 5m. The angle accuracy may be, for example, 5 degrees, or 10 degrees, or 20 degrees.

Further, in an embodiment of the present disclosure, the positioning accuracy may be distinguished into vertical and horizontal accuracy requirements, for example.

In an embodiment of the present disclosure, the upper layer includes at least one of:
an application layer;
a Non-Access Stratum (NAS) layer;
a PC5-signaling transmission (PC5-S) layer; or
a location service (LCS) layer.

In summary, in embodiments of the present disclosure, the upper layer of the first terminal sends the positioning request to the positioning protocol layer of the first terminal, wherein the level of the upper layer is higher than the level of the positioning protocol layer. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme for determining the specific SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 8 is a schematic flowchart of a method for determining a positioning mode provided in an embodiment of the present disclosure. The method is performed by a first terminal. As shown in Fig. 8, the method may include the following steps.

Step 801, sending proximity terminal information by an upper layer of the first terminal to a positioning protocol layer of the first terminal when the upper layer sends a positioning request to the positioning protocol layer.

In an embodiment of the present disclosure, the positioning protocol layer of the first terminal can determine the positioning mode. The positioning protocol layer includes at least one of the SLPP layer, the RSPP layer or the LPP layer.

In an embodiment of the present disclosure, the proximity terminal information includes at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

Further, in an embodiment of the present disclosure, the signal quality information includes but is not limited to Reference Signal Receiving Power (RSRP), Reference Signal Receiving Quality (RSRQ), Received Signal Strength Indicator (RSSI), and Signal to Interference plus Noise Ratio (SINR).

In an embodiment of the present disclosure, information of roles supported by the proximity terminal includes but is not limited to assistant UE, anchor UE, and location server UE.

In an embodiment of the present disclosure, information of positioning modes supported by the proximity terminal includes but is not limited to SL-RTT, SL-TOA, SL-AOA and Uu positioning.

In an embodiment of the present disclosure, the upper layer includes at least one of:
an application layer;
a Non-Access Stratum (NAS) layer;
a PC5-signaling transmission (PC5-S) layer; or
a location service (LCS) layer.

In summary, in embodiments of the present disclosure, the upper layer of the first terminal sends the proximity terminal information to the positioning protocol layer of the first terminal when the upper layer sends the positioning request to the positioning protocol layer of the first terminal. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme for determining the specific SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 9 is a schematic flowchart of a method for determining a positioning mode provided in an embodiment of the present disclosure. The method is performed by a first terminal. As shown in Fig. 9, the method may include the following steps.

Step 901, sending proximity terminal information by any of a PC5-data link (PC5-D) layer, a proximity service (ProSe) layer, or a V2X layer of the first terminal to a positioning protocol layer of the first terminal.

In an embodiment of the present disclosure, the positioning protocol layer of the first terminal can determine the positioning mode. The positioning protocol layer includes at least one of the SLPP layer, the RSPP layer or the LPP layer.

In an embodiment of the present disclosure, any one of the PC5-D layer, ProSe layer, and V2X layer can send the discovery result to the SLPP layer after executing each discovery process, or any one of the PC5-D layer, ProSe layer, and V2X layer can send the discovery result to the RSPP layer after executing each discovery process, or any one of the PC5-D layer, ProSe layer, and V2X layer can send the discovery result to the LPP layer after executing each discovery process.

For example, in an embodiment of the present disclosure, the upper layer of the first terminal may configure any of the PC5-D layer, ProSe layer, and V2X layer to execute the discovery process periodically.

In summary, in embodiments of the present disclosure, any of the PC5-D layer, the ProSe layer or the V2X layer of the first terminal sends the proximity terminal information to the positioning protocol layer of the first terminal. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme for determining the specific SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 10 is a schematic flowchart of a method for determining a positioning mode provided in an embodiment of the present disclosure. The method is performed by a first terminal. As shown in Fig. 10, the method may include the following steps.

Step 1001, triggering a discovery process.

Step 1002, determining a specific SL positioning mode according to a discovery result corresponding to the discovery process.

In an embodiment of the present disclosure, triggering the discovery process includes:

triggering the discovery process, in response to the positioning protocol layer of the first terminal receiving the positioning request sent by the upper layer of the first terminal.

Further, in an embodiment of the present disclosure, the discovery process includes at least one of:
a ProSe discovery process; or
a V2X discovery process.

In an embodiment of the present disclosure, the positioning protocol layer may instruct the ProSe layer or V2X layer to initiate the discovery process, and may also impose certain restrictions on the UE to be discovered. The positioning protocol layer includes at least one of the SLPP layer, the RSPP layer, or the LPP layer.

In an embodiment of the present disclosure, the ProSe layer or V2X layer may inform the SLPP layer or RSPP layer of the discovery results after completing the discovery process.

Further, in an embodiment of the present disclosure, a trigger condition for the discovery process includes at least one of:
the upper layer of the first terminal not providing proximity terminal information of the first terminal;
the proximity terminal information provided by the upper layer not meeting information requirements;
the proximity terminal information provided by the upper layer having expired;
the positioning protocol layer having no available proximity terminal information, wherein the positioning protocol layer includes at least one of the SLPP layer, the RSPP layer, or the LPP layer;
a positioning type requested by the positioning request from the upper layer being a relative position type;
a positioning type requested by the positioning request from the upper layer being an absolute position type;
a positioning type requested being a relative position type and/or an absolute position type; or
the first terminal currently being within a coverage of the network device.

The upper layer includes at least one of:
an application layer;
a Non-Access Stratum (NAS) layer;
a PC5-signaling transmission (PC5-S) layer; or
a location service (LCS) layer.

In summary, in embodiments of the present disclosure, the discovery process is triggered, and the specific SL positioning mode is determined according to the discovery result corresponding to the discovery process. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme for determining the specific SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 11 is a schematic flowchart of a method for determining a positioning mode provided in an embodiment of the present disclosure. The method is performed by a first terminal. As shown in Fig. 11, the method may include the following steps.

Step 1101, specifying to discover a terminal of a specific type, when triggering a discovery process.

Further, in an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

In summary, in embodiments of the present disclosure, when triggering the discovery process, it is specified to discover a terminal of a specific type. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme in the specific SL positioning mode is determined and it is specified to discover the terminal of the specific type during the discovery process. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 12 is a schematic flowchart of a method for determining a positioning mode provided in an embodiment of the present disclosure. The method is performed by a first terminal. As shown in Fig. 12, the method may include the following steps.

Step 1201, in response to positioning information requested by a positioning request belonging to third preset positioning information, determining a specific SL positioning mode as a SL-RTT positioning mode, wherein the third preset positioning information includes at least one of distance information or angle information.

In an embodiment of the present disclosure, the positioning request may be, for example, a positioning request received by the positioning protocol layer. The positioning protocol layer includes at least one of the SLPP layer, the RSPP layer, or the LPP layer.

For example, in an embodiment of the present disclosure, the positioning request may be a request received by a layer with the capability of determining the positioning mode.

In summary, in embodiments of the present disclosure, in response to the positioning information requested by the positioning request belonging to the third preset positioning information, the specific SL positioning mode is determined as the SL-RTT positioning mode, wherein the third preset positioning information includes at least one of distance information or angle information. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme for determining the specific SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

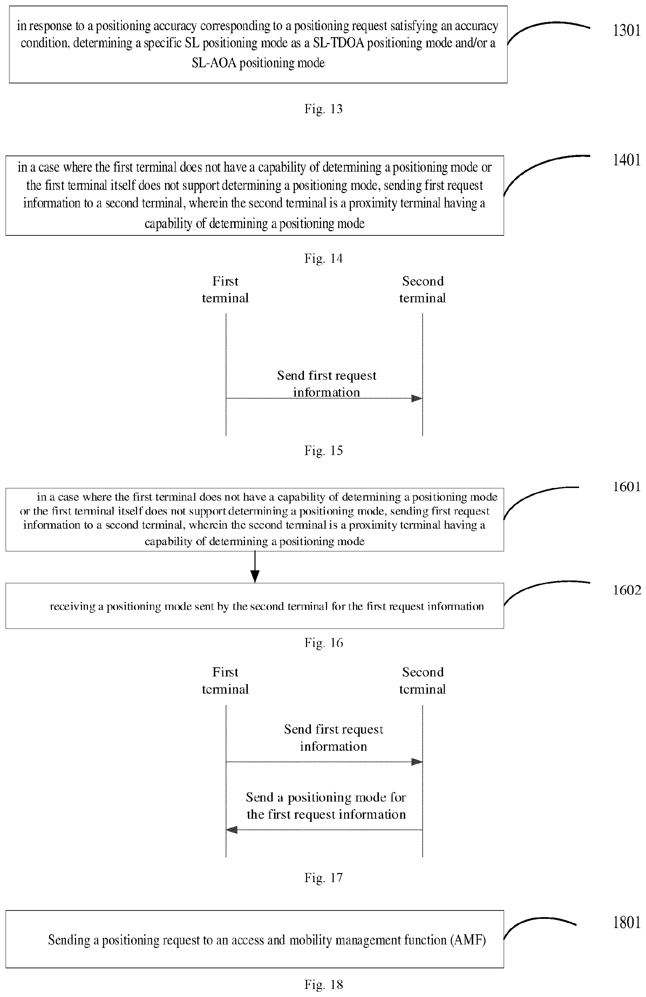

Fig. 13 is a schematic flowchart of a method for determining a positioning mode provided in an embodiment of the present disclosure. The method is performed by a first terminal. As shown in Fig. 13, the method may include the following steps.

Step 1301, in response to a positioning accuracy corresponding to a positioning request satisfying an accuracy condition, determining a specific SL positioning mode as a SL-TDOA positioning mode and/or a SL-AOA positioning mode.

In an embodiment of the present disclosure, the positioning request may be, for example, a positioning request received by the positioning protocol layer. The positioning protocol layer includes at least one of the SLPP layer, the RSPP layer, or the LPP layer.

For example, in an embodiment of the present disclosure, the positioning request may be a request received by a layer having a capability of determining a positioning mode.

Further, in an embodiment of the present disclosure, a positioning type corresponding to the positioning request includes a relative position type and/or an absolute position type.

For example, in an embodiment of the present disclosure, the positioning accuracy includes but is not limited to distance accuracy, angle accuracy, relative position accuracy, and absolute position accuracy. For example, when distance or position accuracy is required to be higher than 1m, or angle accuracy is required to be higher than 10 degrees, the SL-TDOA mode or the SL-AOA mode can be used.

For example, in an embodiment of the present disclosure, the method further includes:
determining an accuracy condition according to condition configuration sent by a network device; or
determining an accuracy condition according to preset condition configuration.

Further, in an embodiment of the present disclosure, the first terminal has a capability of determining a positioning mode or the first terminal itself supports determining a positioning mode.

In summary, in embodiments of the present disclosure, in response to the positioning accuracy corresponding to the positioning request satisfying the accuracy condition, the specific SL positioning mode is determined as a SL-TDOA positioning mode and/or a SL-AOA positioning mode. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme for determining the specific SL positioning mode. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 14 is a schematic flowchart of a method for determining a positioning mode provided in an embodiment of the present disclosure. The method is performed by a first terminal. As shown in Fig. 14, the method may include the following steps.

Step 1401, in a case where the first terminal does not have a capability of determining a positioning mode or the first terminal itself does not support determining a positioning mode, sending first request information to a second terminal, wherein the second terminal is a proximity terminal having a capability of determining a positioning mode.

In an embodiment of the present disclosure, Fig. 15 is a schematic diagram of interaction in a method for determining a positioning mode provided in an embodiment of the present disclosure. In a case where the first terminal does not have a capability of determining a positioning mode or the first terminal itself does not support determining a positioning mode, the first terminal can send first request information to a second terminal, wherein the second terminal is a proximity terminal having a capability of determining a positioning mode.

For example, in an embodiment of the present disclosure, the first request information includes at least one of:
positioning request related information; or
proximity terminal information of the first terminal.

Further, in an embodiment of the present disclosure, the positioning request related information includes, for example, the terminal to be requested, the position type, and the accuracy requirement. The position type includes but is not limited to distance type, angle type, relative position type, and absolute position type.

Further, in an embodiment of the present disclosure, the proximity terminal information of the first terminal includes at least one of:
device identification information of the proximity terminal;
signal quality information of the SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

In an embodiment of the present disclosure, the second terminal may be a proximity terminal having a capability of determining a positioning mode. The second terminal may be, for example, an SL positioning server UE.

In summary, in embodiments of the present disclosure, in a case where the first terminal does not have a capability of determining a positioning mode or the first terminal itself does not support determining a positioning mode, the first terminal sends first request information to a second terminal, wherein the second terminal is a proximity terminal having a capability of determining a positioning mode. **In** embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme of sending the first request information to the second terminal. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 16 is a schematic flowchart of a method for determining a positioning mode provided in an embodiment of the present disclosure. The method is performed by a first terminal. As shown in Fig. 16, the method may include the following steps.

Step 1601, in a case where the first terminal does not have a capability of determining a positioning mode or the first terminal itself does not support determining a positioning mode, sending first request information to a second terminal, wherein the second terminal is a proximity terminal having a capability of determining a positioning mode.

Step 1602, receiving a positioning mode sent by the second terminal for the first request information.

In an embodiment of the present disclosure, Fig. 17 is a schematic diagram of interaction in a method for determining a positioning mode provided in an embodiment of the present disclosure. In a case where the first terminal does not have a capability of determining a positioning mode or the first terminal itself does not support determining a positioning mode, the first terminal can send first request information to a second terminal, wherein the second terminal is a proximity terminal having a capability of determining a positioning mode. The first terminal can receive the positioning mode sent by the second terminal for the first request information.

In an embodiment of the present disclosure, the first request information includes at least one of:
positioning request related information; or
proximity terminal information of the first terminal.

In summary, in embodiments of the present disclosure, in a case where the first terminal does not have a capability of determining a positioning mode or the first terminal itself does not support determining a positioning mode, the first terminal sends first request information to a second terminal, wherein the second terminal is a proximity terminal having a capability of determining a positioning mode; and receives the positioning mode sent by the second terminal for the first request information. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme of receiving the positioning mode sent by the second terminal for the first request information. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 18 is a schematic flowchart of a method for determining a positioning mode provided in an embodiment of the present disclosure. The method is performed by a first terminal. As shown in Fig. 18, the method may include the following steps.

Step 1008, sending a positioning request to an access and mobility management function (AMF).

In an embodiment of the present disclosure, for example, when the first terminal determines to send the positioning request to a network device, the first terminal may for example, send the positioning request to the AMF.

In summary, in embodiments of the present disclosure, the positioning request is sent to the AMF. In embodiments of the present disclosure, a positioning mode determination mechanism can be provided, which can determine the positioning mode in response to the initiated positioning process, reducing the situation where positioning information cannot be obtained. Embodiments of the present disclosure specifically provide a scheme of sending the positioning request to the AMF. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

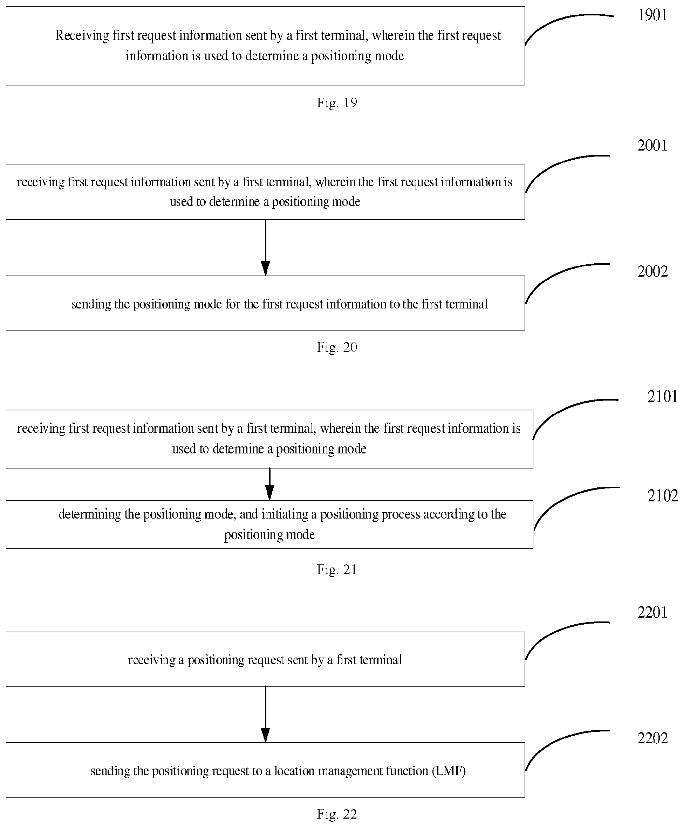

Fig. 19 is a schematic flowchart of a method for determining a positioning mode provided in an embodiment of the present disclosure. The method is performed by a second terminal. As shown in Fig. 19, the method may include the following steps.

Step 1901, receiving first request information sent by a first terminal, wherein the first request information is used to determine a positioning mode.

In an embodiment of the present disclosure, after receiving the first request information sent by the first terminal, the method further includes:
sending a positioning mode for the first request information to the first terminal.

In an embodiment of the present disclosure, after receiving the first request information sent by the first terminal, the method further includes:
determining a positioning mode, and initiating a positioning process according to the positioning mode.

Further, in an embodiment of the present disclosure, the positioning mode includes but is not limited to RTT, TDOA and AOA. Moreover, the second terminal may further provide a list of terminals (UEs) participating in the positioning mode.

In an embodiment of the present disclosure, the first request information refers to request information sent by the first terminal to the second terminal. The "first" in the first request information is used to distinguish it from the second request information, and does not specifically refer to fixed request information.

In an embodiment of the present disclosure, the first request information includes at least one of:
positioning request related information; or
proximity terminal information of the first terminal.

Further, in an embodiment of the present disclosure, the positioning request related information includes, for example, the terminal to be requested, the position type, and the accuracy requirement. The position type includes but is not limited to distance type, angle type, relative position type, and absolute position type.

Further, in an embodiment of the present disclosure, the proximity terminal information of the first terminal includes at least one of:
device identification information of the proximity terminal;
signal quality information of the SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

In an embodiment of the present disclosure, the second terminal may be a proximity terminal having a capability of determining a positioning mode. The second terminal may be, for example, an SL positioning server UE.

In summary, in embodiments of the present disclosure, the first request information sent by the first terminal is received, wherein the first request information is used to determine the positioning mode. In embodiments of the present disclosure, a positioning mode determination mechanism can be provided, which can determine the positioning mode according to the first request information, reducing the situation where positioning information cannot be obtained. This disclosure provides a processing method for a situation of "positioning mod e determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 20 is a schematic flowchart of a method for determining a positioning mode provide in an embodiment of the present disclosure. The method is performed by a second terminal. As shown in Fig. 20, the method may include the following steps.

Step 2001, receiving first request information sent by a first terminal, wherein the first request information is used to determine a positioning mode.

Step 2002, sending the positioning mode for the first request information to the first terminal.

In an embodiment of the present disclosure, the first request information includes at least one of:
positioning request related information; or
proximity terminal information of the first terminal.

Further, in an embodiment of the present disclosure, the positioning request related information includes, for example, the terminal to be requested, the position type, and the accuracy requirement. The position type includes but is not limited to distance type, angle type, relative position type, and absolute position type.

Further, in an embodiment of the present disclosure, the proximity terminal information of the first terminal includes at least one of:
device identification information of the proximity terminal;
signal quality information of the SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

In an embodiment of the present disclosure, the second terminal may be a proximity terminal having a capability of determining a positioning mode. The second terminal may be, for example, an SL positioning server UE.

In summary, in embodiments of the present disclosure, the first request information sent by the first terminal is received, wherein the first request information is used to determine the positioning mode; and the positioning mode for the first request information is sent to the first terminal. In embodiments of the present disclosure, a positioning mode determination mechanism can be provided, which can determine the positioning mode according to the first request information, reducing the situation where positioning information cannot be obtained. Embodiments of the present disclosure specifically provide a scheme of sending the positioning mode for the first request information to the first terminal. This disclosure provides a processing method for a situation of "positioning mode determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 21 is a schematic flowchart of a method for determining a positioning mode provided in an embodiment of the present disclosure. The method is performed by a second terminal. As shown in Fig. 21, the method may include the following steps.

Step 2101, receiving first request information sent by a first terminal, wherein the first request information is used to determine a positioning mode.

Step 2102, determining the positioning mode, and initiating a positioning process according to the positioning mode.

In an embodiment of the present disclosure, the first request information includes at least one of:
positioning request related information; or
proximity terminal information of the first terminal.

Further, in an embodiment of the present disclosure, the positioning request related information includes, for example, the terminal to be requested, the position type, and the accuracy requirement. The position type includes but is not limited to distance type, angle type, relative position type, and absolute position type.

Further, in an embodiment of the present disclosure, the proximity terminal information of the first terminal includes at least one of:
device identification information of the proximity terminal;
signal quality information of the SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

In an embodiment of the present disclosure, the second terminal may be a proximity terminal having a capability of determining a positioning mode. The second terminal may be, for example, an SL positioning server UE.

In summary, in embodiments of the present disclosure, the first request information sent by the first terminal is received, wherein the first request information is used to determine the positioning mode; the positioning mode is determined, and the positioning process is initiated according to the positioning mode. In embodiments of the present disclosure, a positioning mode determination mechanism can be provided, which can determine the positioning mode according to the first request information, reducing the situation where positioning information cannot be obtained. Embodiments of the present disclosure specifically provide a scheme of initiating the positioning process according to the positioning mode. This disclosure provides a processing method for a situation of "positioning mode determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 22 is a schematic flowchart of a method for determining a positioning mode provided in an embodiment of the present disclosure. The method is performed by an AMF. As shown in Fig. 22, the method may include the following steps.

Step 2201, receiving a positioning request sent by a first terminal.

Step 2202, sending the positioning request to a location management function (LMF).

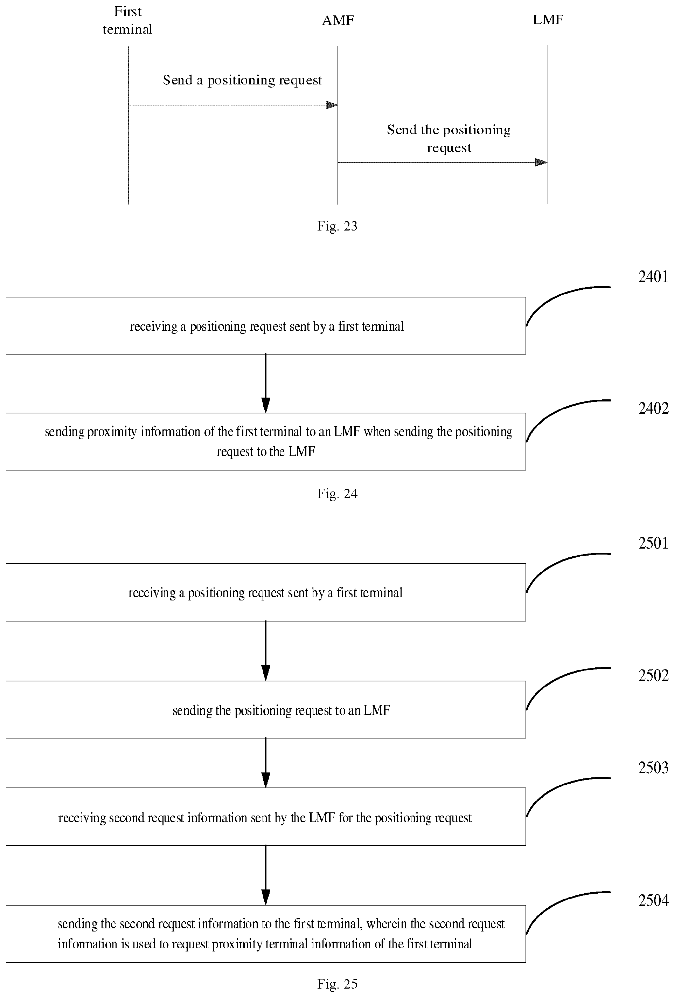

In an embodiment of the present disclosure, Fig. 23 is a schematic diagram of interaction in a method for determining a positioning mode provided in an embodiment of the present disclosure. As shown in Fig. 23, the AMF can receive the positioning request sent by the first terminal, and the AMF can send the positioning request to the LMF.

In an embodiment of the present disclosure, sending the positioning request to the LMF includes:

sending proximity terminal information of the first terminal to the LMF when sending the positioning request to the LMF.

In an embodiment of the present disclosure, the proximity terminal information may be obtained by discovering proximity terminals through a discovery process. The discovery process includes but is not limited to the ProSe discovery process or V2X discovery process.

Further, in an embodiment of the present disclosure, the proximity terminal information includes at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

Further, in an embodiment of the present disclosure, the signal quality information includes but is not limited to Reference Signal Receiving Power (RSRP), Reference Signal Receiving Quality (RSRQ), Received Signal Strength Indicator (RSSI), and Signal to Interference plus Noise Ratio (SINR).

In an embodiment of the present disclosure, information of roles supported by the proximity terminal includes but is not limited to assistant UE, anchor UE, and location server UE.

In an embodiment of the present disclosure, information of positioning modes supported by the proximity terminal includes but is not limited to SL-RTT, SL-TOA, SL-AOA and Uu positioning.

In an embodiment of the present disclosure, after sending the positioning request to the LMF, the method further includes:
receiving second request information sent by the LMF for the positioning request; and
sending the second request information to the first terminal, wherein the second request information is used to request proximity terminal information of the first terminal.

In an embodiment of the present disclosure, the second request information refers to the request information sent by the LMF to the AMF, or the request information received by the AMF from the LMF and forwarded to the first terminal. The "second" in the second request information is only used to distinguish it from the first request information, and does not specifically refer to fixed request information.

In an embodiment of the present disclosure, the second request information includes requesting to discover a terminal of a specific type.

In an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

In summary, in embodiments of the present disclosure, the positioning request sent by the first terminal is received, and the positioning request is sent to the LMF. In embodiments of the present disclosure, a positioning mode determination mechanism can be provided, which can receive the positioning request sent by the first terminal and send the positioning request to the LMF, reducing the situation where the positioning mode cannot be determined. This disclosure provides a processing method for a situation of "positioning mode determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 24 is a schematic flowchart of a method for determining a positioning mode provided in an embodiment of the present disclosure. The method is performed by an AMF. As shown in Fig. 24, the method may include the following steps.

Step 2401, receiving a positioning request sent by a first terminal.

Step 2402, sending proximity information of the first terminal to an LMF when sending the positioning request to the LMF.

In summary, in embodiments of the present disclosure, the positioning request sent by the first terminal is received, and the proximity terminal information of the first terminal is sent to the LMF when sending the positioning request to the LMF. In embodiments of the present disclosure, a positioning mode determination mechanism can be provided, which can receive the positioning request sent by the first terminal and send the positioning request to the LMF, reducing the situation where the positioning mode cannot be determined. Embodiments of the present disclosure specifically provide a scheme of sending the proximity terminal information of the first terminal to the LMF, which can improve the accuracy of determining the positioning mode. This disclosure provides a processing method for a situation of "positioning mode determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 25 is a schematic flowchart of a method for determining a positioning mode provided in an embodiment of the present disclosure. The method is performed by an AMF. As shown in Fig. 25, the method may include the following steps.

Step 2501, receiving a positioning request sent by a first terminal.

Step 2502, sending the positioning request to an LMF.

Step 2503, receiving second request information sent by the LMF for the positioning request.

Step 2504, sending the second request information to the first terminal, wherein the second request information is used to request proximity terminal information of the first terminal.

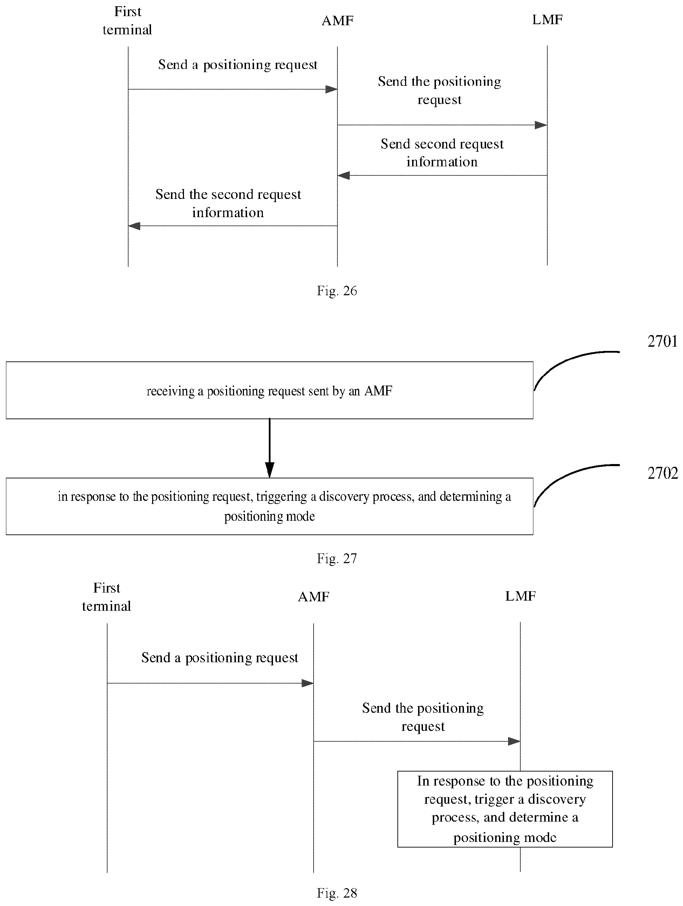

In an embodiment of the present disclosure, Fig. 26 is a schematic diagram of interaction in a method for determining a positioning mode provided in an embodiment of the present disclosure. As shown in Fig. 26, the AMF can receive the positioning request sent by the first terminal; the AMF can send the positioning request to the LMF; the AMF can receive the second request information sent by the LMF for the positioning request; the AMF can send the second request information to the first terminal, wherein the second request information is used to request the proximity terminal information of the first terminal.

In summary, in embodiments of the present disclosure, the positioning request sent by the first terminal is received, the positioning request is sent to the LMF, the second request information sent by the LMF for the positioning request is received, and the second request information is sent to the first terminal, wherein the second request information is used to request the proximity terminal information of the first terminal. In embodiments of the present disclosure, a positioning mode determination mechanism can be provided, which can receive the positioning request sent by the first terminal and send the positioning request to the LMF, reducing the situation where the positioning mode cannot be determined. Embodiments of the present disclosure specifically provide a scheme of receiving the second request information and sending the second request information to the first terminal, which can improve the accuracy of determining the positioning mode. This disclosure provides a processing method for a situation of "positioning mode determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 27 is a schematic flowchart of a method for determining a positioning mode provide in an embodiment of the present disclosure. The method is performed by an LMF. As shown in Fig. 27, the method may include the following steps.

Step 2701, receiving a positioning request sent by an AMF.

Step 2702, in response to the positioning request, triggering a discovery process, and determining a positioning mode.

In an embodiment of the present disclosure, Fig. 28 is a schematic diagram of interaction in a method for determining a positioning mode provided in an embodiment of the present disclosure. As shown in Fig. 28, the AMF can send the positioning request to the LMF. The LMF can receive the positioning request sent by the AMF, and the LMF can trigger the discovery process and determine the positioning mode in response to the positioning request.

In an embodiment of the present disclosure, the discovery process is such as ProSe discovery process or V2X discovery process. The LMF can indicate the discovery function network element of ProSe (such as DDNMF) or indicate the discovery function network element of ProSe through the AMF, triggering the target terminal discovery process.

In an embodiment of the present disclosure, receiving the positioning request sent by the AMF includes:

receiving proximity terminal information of the first terminal sent by the AMF when receiving the positioning request sent by the AMF.

In an embodiment of the present disclosure, the proximity terminal information may be, for example, obtained by discovering the proximity terminals through the discovery process. The discovery process includes but is not limited to the ProSe discovery process or the V2X discovery process.

Further, in an embodiment of the present disclosure, the proximity terminal information includes at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

Further, in an embodiment of the present disclosure, the signal quality information includes but is not limited to Reference Signal Receiving Power (RSRP), Reference Signal Receiving Quality (RSRQ), Received Signal Strength Indicator (RSSI), and Signal to Interference plus Noise Ratio (SINR).

In an embodiment of the present disclosure, information of roles supported by the proximity terminal includes but is not limited to assistant UE, anchor UE, and location server UE.

In an embodiment of the present disclosure, information of positioning modes supported by the proximity terminal includes but is not limited to SL-RTT, SL-TOA, SL-AOA and Uu positioning.

In an embodiment of the present disclosure, after receiving the positioning request sent by the AMF, the method further includes:
sending second request information to the AMF, wherein the second request information is used to request proximity terminal information of the first terminal.

In an embodiment of the present disclosure, the second request information includes requesting to discover a terminal of a specific type.

In an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

In summary, in embodiments of the present disclosure, the positioning request sent by the AMF is received; and in response to the positioning request, the discovery process is triggered, and the positioning mode is determined. In embodiments of the present disclosure, a positioning mode determination mechanism can be provided, which can receive the positioning request sent by the AMF and determine the positioning mode, reducing the situation where the positioning mode cannot be determined. This disclosure provides a processing method for a situation of "positioning mode determination", which can provide the positioning mode determination mechanism in case of receiving the positioning request sent by the AMF, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

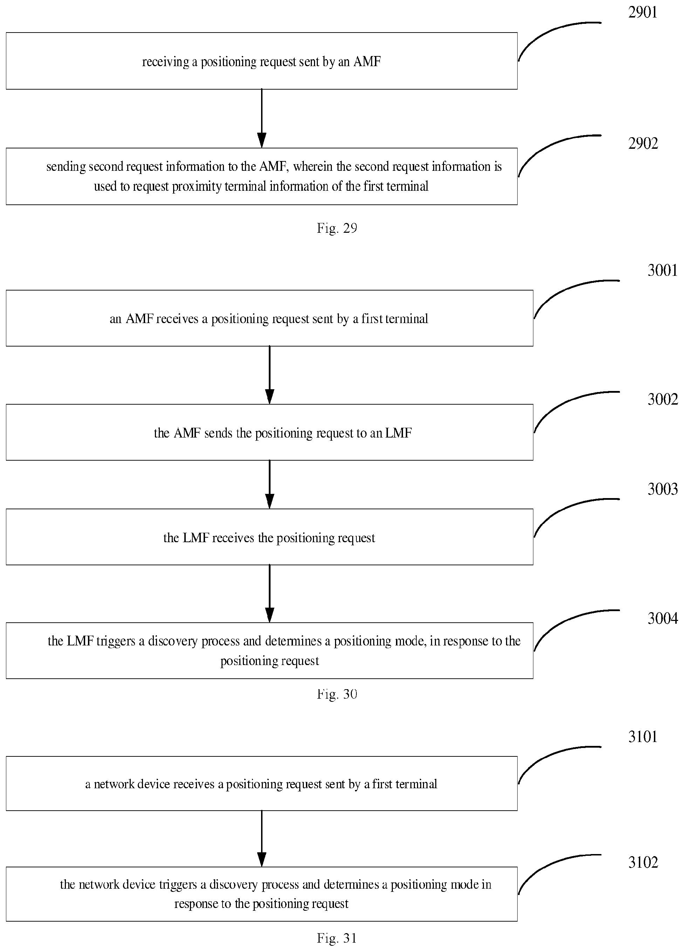

Fig. 29 is a schematic flowchart of a method for determining a positioning mode provided in an embodiment of the present disclosure. The method is performed by an LMF. As shown in Fig. 29, the method may include the following steps.

Step 2901, receiving a positioning request sent by an AMF.

Step 2902, sending second request information to the AMF, wherein the second request information is used to request proximity terminal information of the first terminal.

In an embodiment of the present disclosure, the second request information includes requesting to discover a terminal of a specific type.

In an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

**In** summary, in embodiments of the present disclosure, the positioning request sent by the AMF is received; and the second request information is sent to the AMF, wherein the second request information is used to request the proximity terminal information of the first terminal. **In** embodiments of the present disclosure, a positioning mode determination mechanism can be provided, which can receive the positioning request sent by the AMF and determine the positioning mode, reducing the situation where the positioning mode cannot be determined. Embodiments of the present disclosure specifically provide a scheme of sending the second request information to the AMF. This disclosure provides a processing method for a situation of "positioning mode determination", which can provide the positioning mode determination mechanism in case of receiving the positioning request sent by the AMF, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 30 is a schematic flowchart of a method for determining a positioning mode provided in an embodiment of the present disclosure. As shown in Fig. 30, the method may include the following steps.

Step 3001, an AMF receives a positioning request sent by a first terminal.

Step 3002, the AMF sends the positioning request to an LMF.

Step 3003, the LMF receives the positioning request.

Step 3004, the LMF triggers a discovery process and determines a positioning mode, in response to the positioning request.

**In** an embodiment of the present disclosure, when the AMF sends the positioning request to the LMF, the AMF may send proximity terminal information of the first terminal to the LMF.

In an embodiment of the present disclosure, after the AMF sends the positioning request to the LMF, the AMF may receive second request information sent by the LMF for the positioning request, and the AMF may send the second request information to the first terminal, wherein the second request information is used to request the proximity terminal information of the first terminal.

In an embodiment of the present disclosure, the second request information includes requesting to discover a terminal of a specific type.

In an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

In summary, in embodiments of the present disclosure, the AMF receives the positioning request sent by the first terminal; the AMF sends the positioning request to the LMF; the LMF receives the positioning request; the LMF triggers the discovery process and determines the positioning mode, in response to the positioning request. In embodiments of the present disclosure, a positioning mode determination mechanism can be provided, in which the LMF can receive the positioning request sent by the AMF and determine the positioning mode, reducing the situation where the positioning mode cannot be determined. This disclosure provides a processing method for a situation of "positioning mode determination", which can provide the positioning mode determination mechanism when the LMF receives the positioning request sent by the AMF, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 31 is a schematic flowchart of a method for determining a positioning mode provided in an embodiment of the present disclosure. As shown in Fig. 31, the method may include the following steps.

Step 3101, a network device receives a positioning request sent by a first terminal.

Step 3102, the network device triggers a discovery process and determines a positioning mode in response to the positioning request.

In this embodiment, the network device includes but is not limited to a core network device.

In summary, in embodiments of the present disclosure, the network device receives the positioning request sent by the first terminal; and the network device triggers the discovery process and determines the positioning mode in response to the positioning request. In embodiments of the present disclosure, a positioning mode determination mechanism can be provided, in which the network device can receive the positioning request sent by the first terminal and determine the positioning mode, reducing the situation where the positioning mode cannot be determined. This disclosure provides a processing method for a situation of "positioning mode determination", which can provide the positioning mode determination mechanism when the network device receives the positioning request sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

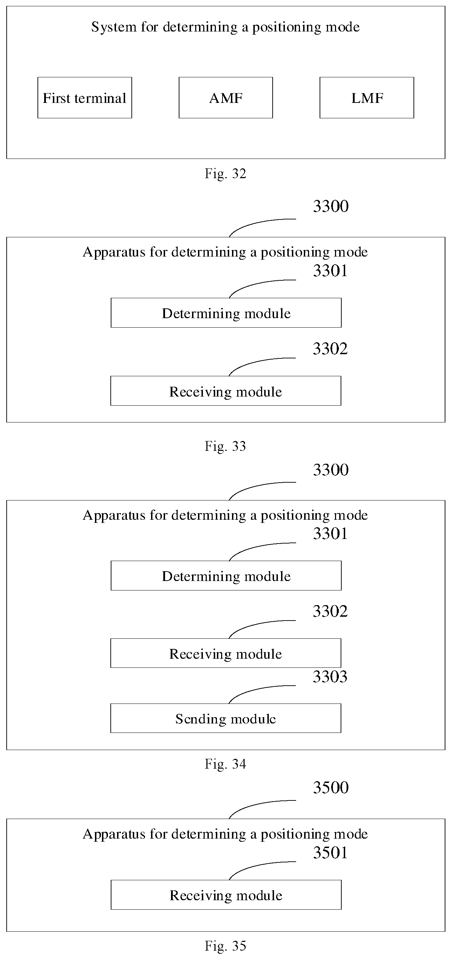

Fig. 32 is a block diagram of a system for determining a positioning mode provide in an embodiment of the present disclosure. The system includes a first terminal, an AMF and an LMF.

The first terminal is configured to send a positioning request to the AMF.

The AMF is configured to receive the positioning request sent by the first terminal.

The AMF is configured to send the positioning request to the LMF.

The LMF is configured to receive the positioning request sent by the AMF.

The LMF is configured to trigger a discovery process and determine a positioning mode in response to the positioning request.

Fig. 33 is a block diagram of an apparatus for determining a positioning mode provided in an embodiment of the present disclosure. As shown in Fig. 33, the apparatus 3300 may be arranged on a first terminal side. The apparatus 3300 may include:
in response to s positioning process initiated by the first terminal, performing at least one of the following operations:
a determining module 3301, configured to determine a positioning mode corresponding to the positioning process;
a receiving module 3302, configured to receive a positioning mode corresponding to the positioning process sent by a network device.

In summary, in the apparatus for determining a positioning mode in embodiments of the present disclosure, in response to the positioning process initiated by the first terminal, at least one of the following operations is performed: the determining module determining the positioning mode corresponding to the positioning process; or the receiving module receiving the positioning mode corresponding to the positioning process sent by the network device. In embodiments of the present disclosure, a positioning mode determination mechanism can be provided, which can determine the positioning mode in response to the initiated positioning process, reducing the situation where positioning information cannot be obtained. This disclosure provides a processing method for a situation of "positioning mode determination", which can provide the positioning mode determination mechanism when the first terminal initiates the positioning process, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Optionally, in an embodiment of the present disclosure, the determining module 3301 is further configured to determine whether to send a positioning request to a network device, in response to the positioning process initiated by the first terminal.

Optionally, in an embodiment of the present disclosure, the determining module 3301 is configured for at least one of followings when determining whether to send the positioning request to the network device:
not sending the positioning request to the network device in a case where the first terminal is outside a coverage of the network device, and the first terminal supports a sidelink (SL) positioning mode;
sending the positioning request to the network device in a case where the first terminal is within a coverage of the network device, and the first terminal supports a Uu interface positioning mode;
not sending the positioning request to the network device in response to positioning information requested by the positioning request belonging to first preset positioning information, in a case where the first terminal is within a coverage of the network device, and the first terminal supports a SL positioning mode, wherein the first preset positioning information comprises at least one of distance information, angle information or relative position information;
sending the positioning request to the network device in response to positioning information requested by the positioning request being absolute position information and the first terminal supporting a Uu interface positioning mode, in a case where the first terminal is within a coverage of the network device;
determining whether to send the positioning request to the network device according to a configured strategy, in a case where the first terminal is within a coverage of the network device, wherein the configured strategy includes at least one of a network configured strategy or a preconfigured strategy;
sending the positioning request to the network device, in a case where the first terminal is within a coverage of the network device, and the first terminal does not support a SL positioning mode; or
not sending the positioning request to the network device, in a case where the first terminal is within a coverage of the network device through a SL relay, and the first terminal supports a SL positioning mode.

Optionally, in an embodiment of the present disclosure, the determining module 3301 is further configured to:
determine the positioning mode, in response to the first terminal not sending the positioning request to the network device;
receive the positioning mode sent by the network device for the positioning request, in response to the first terminal sending the positioning request to the network device.

Optionally, in an embodiment of the present disclosure, the determining module 3301 is configured for at least one of followings when determining the positioning mode corresponding to the positioning process:
determining the positioning mode corresponding to the positioning process as a SL positioning mode, in a case where the first terminal is currently outside a coverage of the network device, and the first terminal supports the SL positioning mode;
determining the positioning mode corresponding to the positioning process as a Uu interface positioning mode, in a case where the first terminal is currently within a coverage of the network device, and the first terminal supports the Uu interface positioning mode;
determining the positioning mode corresponding to the positioning process as a SL positioning mode, in a case where the first terminal is within a coverage of the network device through a SL relay, and the first terminal supports the SL positioning mode;
determining the positioning mode corresponding to the positioning process as a SL positioning mode, in a case where positioning information requested by the first terminal belongs to second preset positioning information, and the first terminal supports the SL positioning mode, wherein the second preset positioning information includes at least one of distance information, angle information, or relative position information;
determining the positioning mode corresponding to the positioning process as a Uu interface positioning mode, in a case where the first terminal supports only the Uu interface positioning mode;
determining the positioning mode corresponding to the positioning process as a SL positioning mode, in a case where the first terminal supports only the SL positioning mode; or
determining the positioning mode corresponding to the positioning process as a joint positioning mode of a SL positioning mode and a Uu interface positioning mode, in a case where a quality of service (QoS) condition of the positioning request sent to the network device meets a threshold condition, and the first terminal supports the SL positioning mode and the Uu interface positioning mode.

Optionally, in an embodiment of the present disclosure, after determining the positioning mode corresponding to the positioning process, the determining module 3301 is further configured to:
in response to the positioning mode corresponding to the positioning process being the SL positioning mode, determine a specific SL positioning mode; and
initiate a SL positioning process according to the specific SL positioning mode.

Optionally, in an embodiment of the present disclosure, when determining the specific SL positioning mode, the determining module 3301 is specifically configured to:
determine the specific SL positioning mode through a positioning protocol layer of the first terminal, wherein the positioning protocol layer includes at least one of a sidelink positioning protocol (SLPP) layer, a ranging and sidelink positioning protocol (RSPP) layer, or an LTE positioning protocol (LPP) layer.

Optionally, in an embodiment of the present disclosure, Fig. 34 is a block diagram of an apparatus for determining a positioning mode provided in an embodiment of the present disclosure. As shown in Fig. 34, the apparatus 3300 further includes a sending module 3303, configured for an upper layer of the first terminal to send the positioning request to the positioning protocol layer of the first terminal, wherein a level of the upper layer of the first terminal is higher than a level of the positioning protocol layer.

Optionally, in an embodiment of the present disclosure, the positioning request includes at least one of:
a positioning type; or
a positioning accuracy.

Optionally, in an embodiment of the present disclosure, the sending module 3303 is further configured for the upper layer of the first terminal to send proximity terminal information to the positioning protocol layer of the first terminal when sending the positioning request to the positioning protocol layer.

Optionally, in an embodiment of the present disclosure, the proximity terminal information includes at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

Optionally, in an embodiment of the present disclosure, the sending module 3303 is further configured for any of a PC5-data link (PC5-D) layer, a proximity service (ProSe) layer, or a V2X layer of the first terminal to send proximity terminal information to the positioning protocol layer of the first terminal.

Optionally, in an embodiment of the present disclosure, when determining the specific SL positioning mode, the determining module 3301 is specifically configured to:
trigger a discovery process; and
determine the specific SL positioning mode according to a discovery result corresponding to the discovery process.

Optionally, in an embodiment of the present disclosure, when triggering the discovery process, the determining module 3301 is specifically configured to:
trigger the discovery process, in response to the positioning protocol layer of the first terminal receiving the positioning request sent by the upper layer of the first terminal.

Optionally, in an embodiment of the present disclosure, the discovery process includes at least one of:
a ProSe discovery process; or
a V2X discovery process.

Optionally, in an embodiment of the present disclosure, a trigger condition for the discovery process includes at least one of:
the upper layer of the first terminal not providing proximity terminal information of the first terminal;
the proximity terminal information provided by the upper layer not meeting information requirements;
the proximity terminal information provided by the upper layer having expired;
the positioning protocol layer having no available proximity terminal information, wherein the positioning protocol layer includes at least one of the SLPP layer, the RSPP layer, or the LPP layer;
a positioning type requested by the positioning request from the upper layer being a relative position type;
a positioning type requested by the positioning request from the upper layer being an absolute position type;
a positioning type requested being a relative position type and/or an absolute position type; or
the first terminal currently being within a coverage of the network device.

Optionally, in an embodiment of the present disclosure, the upper layer includes at least one of:
an application layer;
a Non-Access Stratum (NAS) layer;
a PC5-signaling transmission (PC5-S) layer; or
a location service (LCS) layer.

Optionally, in an embodiment of the present disclosure, when triggering the discovery process, the determining module 3301 is specifically configured to:
specify to discover a terminal of a specific type, when triggering the discovery process.

Optionally, in an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

Optionally, in an embodiment of the present disclosure, when determining the specific SL positioning mode, the determining module 3301 is specifically configured to:
in response to positioning information requested by the positioning request belonging to third preset positioning information, determine the specific SL positioning mode as a SL-RTT positioning mode, wherein the third preset positioning information includes at least one of distance information or angle information.

Optionally, in an embodiment of the present disclosure, when determining the specific SL positioning mode, the determining module 3301 is specifically configured to:
in response to a positioning accuracy corresponding to a positioning request satisfying an accuracy condition, determine the specific SL positioning mode as a SL-TDOA positioning mode and/or a SL-AOA positioning mode.

Optionally, in an embodiment of the present disclosure, the determining module 3301 is further configured to:
determine the accuracy condition according to condition configuration sent by a network device; or
determine the accuracy condition according to preset condition configuration.

Optionally, in an embodiment of the present disclosure, the positioning type corresponding to the positioning request includes a relative position type and/or an absolute position type.

Optionally, in an embodiment of the present disclosure, the first terminal has a capability of determining a positioning mode or the first terminal itself supports determining a positioning mode.

Optionally, in an embodiment of the present disclosure, the sending module 3303 is further configured to:
in a case where the first terminal does not have a capability of determining a positioning mode or the first terminal itself does not support determining a positioning mode, send first request information to a second terminal, wherein the second terminal is a proximity terminal having a capability of determining a positioning mode.

Optionally, in an embodiment of the present disclosure, the first request information includes at least one of:
positioning request related information; or
proximity terminal information of the first terminal.

Optionally, in an embodiment of the present disclosure, after sending the request information to the second terminal, the sending module 3302 is further configured to:
receive a positioning mode sent by the second terminal for the first request information.

Optionally, in an embodiment of the present disclosure, the sending module 3303 is further configured to:
send a positioning request to an access and mobility management function (AMF).

Fig. 35 is a block diagram of an apparatus for determining a positioning mode provided in an embodiment of the present disclosure. As shown in Fig. 35, the apparatus 3500 may be arranged on a second terminal side. The apparatus 3500 may include:
a receiving module 3501, configured to receive first request information sent by a first terminal, wherein the first request information is used to determine a positioning mode.

In summary, in the apparatus for determining a positioning mode in embodiments of the present disclosure, the first request information sent by the first terminal is received by the receiving module, wherein the first request information is used to determine the positioning mode. In embodiments of the present disclosure, a positioning mode determination mechanism can be provided, which can determine the positioning mode according to the first request information, reducing the situation where positioning information cannot be obtained. This disclosure provides a processing method for a situation of "positioning mode determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Optionally, in an embodiment of the present disclosure, after receiving the request information sent by the first terminal, the receiving module 3501 is further configured to:
send a positioning mode for the first request information to the first terminal.

After receiving the first request information sent by the first terminal, the receiving module 3501 is further configured to:
determine a positioning mode, and initiate a positioning process according to the positioning mode.

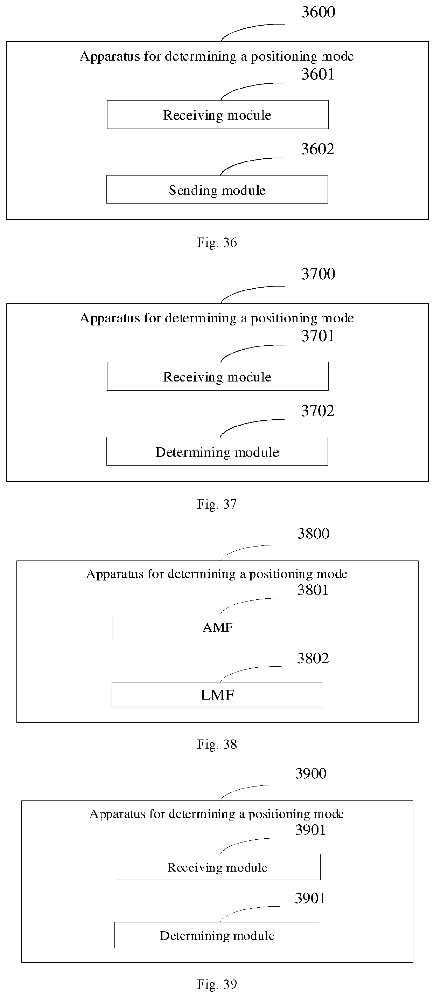

Fig. 36 is a block diagram of an apparatus for determining a positioning mode provided in an embodiment of the present disclosure. As shown in Fig. 36, the apparatus 3600 may be arranged on an AMF side. The apparatus 3600 may include:
a receiving module 3601, configured to receive a positioning request sent by a first terminal; and
a sending module 3602, configured to send the positioning request to an LMF.

**In** summary, in the apparatus for determining a positioning mode in embodiments of the present disclosure, the positioning request sent by the first terminal is received by the receiving module, and the positioning request is sent by the sending module to the LMF. **In** embodiments of the present disclosure, a positioning mode determination mechanism can be provided, which can receive the positioning request sent by the first terminal and send the positioning request to the LMF, reducing the situation where the positioning mode cannot be determined. This disclosure provides a processing method for a situation of "positioning mode determination", which can provide the positioning mode determination mechanism in case of receiving the first request information sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Optionally, in an embodiment of the present disclosure, when sending the positioning request to the LMF, the sending module 3602 is specifically configured to:
send proximity terminal information of the first terminal to the LMF when sending the positioning request to the LMF.

Optionally, in an embodiment of the present disclosure, after sending the positioning request to the LMF, the sending module 3602 is further configured to:
receive second request information sent by the LMF for the positioning request; and
send the second request information to the first terminal, wherein the second request information is used to request proximity terminal information of the first terminal.

Optionally, in an embodiment of the present disclosure, the second request information includes requesting to discover a terminal of a specific type.

Optionally, in an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

Fig. 37 is a block diagram of an apparatus for determining a positioning mode provided in an embodiment of the present disclosure. As shown in Fig. 37, the apparatus 3700 may be arranged on a LMF side. The apparatus 3700 may include:
a receiving module 3701, configured to receive a positioning request sent by an AMF;
a determining module 3702, configured to trigger a discovery process and determine a positioning mode in response to the positioning request.

In summary, in the apparatus for determining a positioning mode in embodiments of the present disclosure, the positioning request sent by the AMF is received by the receiving mode; and in response to the positioning request, the determining module triggers the discovery process and determines the positioning mode. **In** embodiments of the present disclosure, a positioning mode determination mechanism can be provided, which can receive the positioning request sent by the AMF and determine the positioning mode, reducing the situation where the positioning mode cannot be determined. This disclosure provides a processing method for a situation of "positioning mode determination", which can provide the positioning mode determination mechanism in case of receiving the positioning request sent by the AMF, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Optionally, in an embodiment of the present disclosure, when receiving the positioning request sent by the AMF, the receiving module 3701 is specifically configured to:
receive proximity terminal information of the first terminal sent by the AMF when receiving the positioning request sent by the AMF.

Optionally, in an embodiment of the present disclosure, after receiving the positioning request sent by the AMF, the receiving module 3701 is further configured to:
send second request information to the AMF, wherein the second request information is used to request proximity terminal information of the first terminal.

Optionally, in an embodiment of the present disclosure, the second request information includes requesting to discover a terminal of a specific type.

Optionally, in an embodiment of the present disclosure, the terminal of the specific type includes at least one of:
a SL positioning anchor UE;
a SL positioning anchor UE with position information;
a supported SL positioning anchor UE, wherein the specific SL positioning mode includes at least one of SL-time difference of arrival (TDOA), SL-angle of arrival (AOA), or SL-round-trip time (RTT);
a SL positioning location server UE; or
a SL positioning assistant terminal.

Fig. 38 is a block diagram of an apparatus for determining a positioning mode provided in an embodiment of the present disclosure. As shown in Fig. 38, the apparatus 3800 may include an AMF 3801 and a LMF 3802.

The AMF 3801 is configured to receive a positioning request sent by a first terminal.

The AMF 3801 is further configured to send the positioning request to the LMF.

The LMF 3802 is configured to receive the positioning request.

The LMF 3802 is further configured to trigger a discovery process and determine a positioning mode in response to the poisoning request.

In summary, in the apparatus for determining a positioning mode in embodiments of the present disclosure, the AMF receives the positioning request sent by the first terminal; the AMF sends the positioning request to the LMF; the LMF receives the positioning request; the LMF triggers the discovery process and determines the positioning mode, in response to the positioning request. In embodiments of the present disclosure, a positioning mode determination mechanism can be provided, in which the LMF can receive the positioning request sent by the AMF and determine the positioning mode, reducing the situation where the positioning mode cannot be determined. This disclosure provides a processing method for a situation of "positioning mode determination", which can provide the positioning mode determination mechanism when the LMF receives the positioning request sent by the AMF, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

Fig. 39 is a block diagram of an apparatus for determining a positioning mode provided in an embodiment of the present disclosure. As shown in Fig. 39, the apparatus 3900 may include:

a receiving module 3901, configured for a network device to receive a positioning request sent by a first terminal;

a determining module 3902, configured for the network device to trigger a discovery process and determine a positioning mode in response to the positioning request.

In summary, in the apparatus for determining a positioning mode in embodiments of the present disclosure, the network device receives the positioning request sent by the first terminal through the receiving mode; and the network device triggers the discovery process and determines the positioning mode in response to the positioning request through the determining module. In embodiments of the present disclosure, a positioning mode determination mechanism can be provided, in which the determining module can trigger the discovery process and determine the positioning mode based on the received positioning request, reducing the situation where the positioning mode cannot be determined. This disclosure provides a processing method for a situation of "positioning mode determination", which can provide the positioning mode determination mechanism when the network device receives the positioning request sent by the first terminal, reduce the situation where inaccurate positioning mode determination leads to a mismatch between positioning mode and positioning information, or results in that the positioning information cannot be obtained, reduce the situation where positioning cannot be performed, determine the positioning information corresponding to the positioning mode, and improve the accuracy of determining the positioning information.

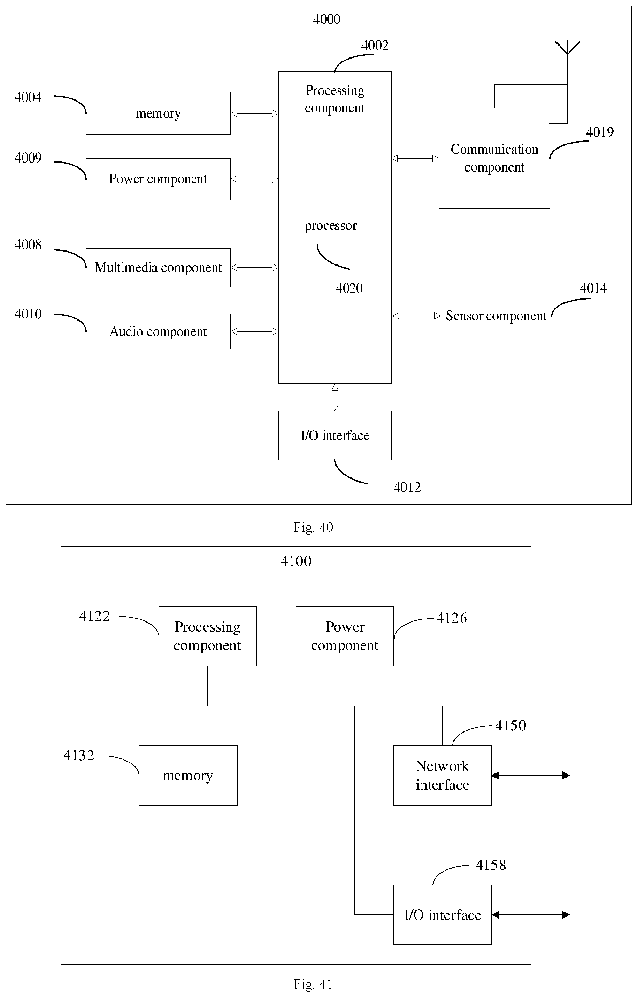

Fig. 40 is a block diagram of a terminal (UE) 4000 provided in an embodiment of the present disclosure. For example, the UE 4000 may be a mobile phone, computer, digital broadcasting terminal, messaging device, game console, tablet device, medical device, fitness device, personal digital assistant, etc.

Referring to Fig. 40, the UE 4000 may include one or more of the following components: a processing component 4002, a memory 4004, a power component 4006, a multimedia component 4008, an audio component 4010, an input/output (I/O) interface 4012, a sensor component 4014, and a communication component 4016.

The processing component 4002 typically controls overall operations of the UE 4000, such as the operations associated with display, telephone calls, data communications, camera operations, and recording operations. The processing component 4002 may include one or more processors 4020 to execute instructions. Moreover, the processing component 4002 may include one or more modules which facilitate the interaction between the processing component 4002 and other components. For instance, the processing component 4002 may include a multimedia module to facilitate the interaction between the multimedia component 4008 and the processing component 4002.

The memory 4004 is configured to store various types of data to support the operation of the UE 4000. Examples of such data include instructions for any applications or methods operated on the UE 4000, contact data, phonebook data, messages, pictures, video, etc. The memory 4004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 4006 provides power to various components of the UE 4000. The power component 4006 may include a power management system, one or more power sources, and any other components associated with the generation, management, and distribution of power in the UE 4000.

The multimedia component 4008 includes a screen providing an output interface between the UE 4000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 4008 includes a front camera and/or a rear camera. When the UE 4000 is in an operation mode, such as a shooting mode or a video mode, the front camera and/or the rear camera can receive external multimedia data. Each front camera and rear camera can be a fixed optical lens system or have focal length and optical zoom capabilities.

The audio component 4010 is configured to output and/or input audio signals. For example, the audio component 4010 includes a microphone ("MIC") configured to receive an external audio signal when the UE 4000 is in an operation mode, such as a call mode, a recording mode, and a voice recognition mode. The received audio signal may be further stored in the memory 4004 or transmitted via the communication component 4016. In some embodiments, the audio component 4010 further includes a speaker for outputting audio signals.

The I/O interface 4012 provides an interface between the processing component 4002 and peripheral interface modules, such as a keyboard, a click wheel, buttons, and the like. The buttons may include but are not limited to home button, volume button, start button, and lock button.

The sensor component 4014 includes one or more sensors to provide status assessments of various aspects of the UE 4000. For instance, the sensor component 4014 may detect an open/closed status of the UE 4000, relative positioning of components, e.g., the display and the keypad, of the UE 4000, a change in position of the UE 4000 or a component of the UE 4000, a presence or absence of a target object contact with the UE 4000, an orientation or an acceleration/deceleration of the UE 4000, and a change in temperature of the UE 4000. The sensor component 4014 may include a proximity sensor configured to detect the presence of nearby objects without any physical contact. The sensor component 4014 may also include a light sensor, such as a CMOS or CCD image sensor, applicable for imaging applications. In some embodiments, the sensor component 4014 may also include an acceleration sensor, a gyroscope sensor, a magnetic sensor, a pressure sensor or a temperature sensor.

The communication component 4016 is configured to facilitate communication, wired or wirelessly, between the UE 4000 and other devices. The UE 4000 can access a wireless network based on a communication standard, such as WiFi, 2G, or 3G, or a combination thereof. In an exemplary embodiment, the communication component 4016 receives a broadcast signal or broadcast associated information from an external broadcast management system via a broadcast channel. In an exemplary embodiment, the communication component 4016 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the UE 4000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

Fig. 41 is a block diagram of a base station 4100 provided in an embodiment of the present disclosure. For example, the base station 4100 may be provided as a network device. Referring to Fig. 41, the base station 4100 includes a processing component 4122, which further includes at least one processor, and memory resources represented by a memory 4132, configured to store instructions executable by the processing component 4122, for example, application programs. The application programs stored in memory 4132 may include one or more modules each corresponding to a set of instructions. In addition, the processing component 4122 is configured to execute instructions to perform any of the methods previously applied to the base station, such as the method shown in Fig. 27.

The base station 4100 may also include a power component 4130 configured to perform power management for the base station 4100, a wired or wireless network interface 4150 configured to connect the base station 4100 to the network, and an input/output (I/O) interface 4158. Base station 4100 can operate based on operating systems stored in the memory 4132, such as Windows Server TM, Mac OS XTM, Unix TM, Linux TM, Free BSDTM, or similar.

In the above embodiments provided in this disclosure, the methods provided in this disclosure are introduced from the perspectives of network devices and UE, respectively. In order to achieve the various functions in the methods provided in the embodiments of the present disclosure, the network devices and UE may include hardware structures and software modules, which can be implemented in the form of hardware structures, software modules, or a combination of hardware structures and software modules. One of the above functions can be executed by a hardware structure, a software module, or a combination of a hardware structure and a software module.

In the above embodiments provided in this disclosure, the methods provided in this disclosure are introduced from the perspectives of network devices and UE, respectively. In order to achieve the various functions in the methods provided in the embodiments of the present disclosure, the network devices and UE may include hardware structures and software modules, which can be implemented in the form of hardware structures, software modules, or a combination of hardware structures and software modules. One of the above functions can be executed by a hardware structure, a software module, or a combination of a hardware structure and a software module.

In the above embodiments provided in this disclosure, the methods provided in this disclosure are introduced from the perspectives of network devices and UE, respectively. In order to achieve the various functions in the methods provided in the embodiments of the present disclosure, the network devices and UE may include hardware structures and software modules, which can be implemented in the form of hardware structures, software modules, or a combination of hardware structures and software modules. One of the above functions can be executed by a hardware structure, a software module, or a combination of a hardware structure and a software module.

A communication device is provided in embodiments of the present disclosure. The communication device may include a transceiver module and a processing module. The transceiver module may include a sending module and/or a receiving module. The sending module is used to implement the sending function, and the receiving module is used to implement the receiving function. The transceiver module can implement the sending function and/or the receiving function.

The communication device may be a terminal (such as the terminal in the aforementioned method embodiments), a device in the terminal, or a device that can be used in conjunction with the terminal. Alternatively, the communication device may be a network device, a device within a network device, or a device that can be used in conjunction with the network device.

Another communication device is provided in embodiments of the present disclosure. The communication device 1700 may be a network device, or may be a terminal (such as the terminal in the aforementioned method embodiments), or may be a chip, a system on chip or a processor that supports the network device to implement the above methods, or may be a chip, a system on chip or a processor that supports the terminal to implement the above methods. The device may be configured to implement the method described in the method embodiments, and for details, reference may be made to descriptions in the method embodiments.

The communication device may include one or more processors. The processor may be a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

Optionally, the communication device may further include one or more memories with a computer program stored thereon. The processor executes the computer program so that the communication device performs the method as described in the above method embodiments. Optionally, the memory may further store data. The communication device and the memory may be independently configured or integrated together.

Optionally, the communication device may further include a transceiver and an antenna. The transceiver may be referred to as a transceiver unit, a transceiver machine or a transceiver circuit, configured to achieve a transceiver function. The transceiver may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the communication device may further include one or more interface circuits. The interface circuit is configured to receive code instructions and transmit the code instructions to the processor. The processor runs the code instructions so that the communication device performs the method according to the above method embodiments.

The communication device is a first terminal (such as the terminal in the aforementioned method embodiments): the processor is configured to perform the method described in any of Fig. 2-Fig. 18.

The communication device is a second terminal (such as the terminal in the aforementioned method embodiments): the processor is configured to perform the method shown in any of Fig. 19-Fig. 21.

The communication device is an AMF: the processor is configured to perform the method shown in any of Fig. 22-Fig. 26.

The communication device is an LMF: the processor is configured to perform the method shown in any of Fig. 27-Fig. 29.

The communication device is a core network: the processor is configured to perform the method shown in Fig. 30.

The communication device is a network device: the processor is configured to perform the method shown in Fig. 31.

In an implementation, the processor may include a transceiver configured to implement receiving and transmitting functions. For example, the transceiver may be a transceiver circuit, or an interface, or an interface circuit. The transceiver circuit, the interface or the interface circuit configured to implement receiving and transmitting functions may be separate or integrated together. The transceiver circuit, the interface or the interface circuit may be configured to read and write codes/data, or the transceiver circuit, the interface or the interface circuit may be configured to transmit or deliver a signal.

In an implementation, the processor may store a computer program, which runs on the processor and enables the communication device to perform the method described in the above method embodiments. The computer program may be solidified in the processor, in which case the processor may be implemented by hardware.

In an implementation, the communication device may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS(BiCMOS), silicon germanium(SiGe) and gallium arsenide(GaAs).

The communication device described in the above embodiments may be a network device or a terminal (such as the terminal in the aforementioned method embodiments), but the scope of the communication device described in the disclosure is not limited thereto, and a structure of the communication device may not be limited. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.;
(6) others, and so forth.

In the case that the communication device may be a chip or a system on chip, the chip includes a processor and an interface, in which the number of processors may be one or more and the number of interfaces may be more than one.

Optionally, the chip further includes a memory, configured to save necessary computer program and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

A readable storage medium with instructions stored thereon is further provided in the disclosure. When the instructions are executed by a computer, steps in any one of the method embodiments are implemented.

A computer program product is further provided in the disclosure. The computer program product implements functions of any one of the above method embodiments when executed by a processor.

In the above embodiments, the functions may be wholly or partially implemented by software, hardware, firmware, or any combination thereof. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Ordinary technical personnel in this field can understand that the various numerical numbers mentioned in this disclosure, such as the first and second, are only for the convenience of description and are not intended to limit the scope of the embodiments of the present disclosure, but also indicate the order of occurrence.

"At least one" in the disclosure can also be described as one or more, and the "multiple" can be two, three, four, or more, without limitation in this disclosure. In embodiments of the present disclosure, for a kind of technical feature, the technical features in this kind of technical feature are distinguished by "first", "second", "third", "A", "B", "C", and "D", etc. The technical features described by "first", "second", "third", "A", "B", "C", and "D" have no order of priority or size.

After considering the specification and practicing the invention disclosed herein, those skilled in the art will easily come up with other embodiments of the invention. This disclosure is intended to cover any variations, uses, or adaptations of the present invention that follow the general principles of the present invention and include common knowledge or customary technical means in the art that are not disclosed in this disclosure. The specification and embodiments are only considered exemplary, and the true scope and spirit of this disclosure are indicated by the following claims.

It should be understood that this disclosure is not limited to the precise structure described above and shown in the accompanying drawings, and various modifications and changes can be made without departing from its scope. The scope of this disclosure is limited only by the appended claims.

## Claims

1. A method for determining a positioning mode, performed by a first terminal, comprising:
in response to a positioning process initiated by the first terminal, performing at least one of:
determining a positioning mode corresponding to the positioning process; or
receiving a positioning mode corresponding to the positioning process sent by a network device.

2. The method of claim 1, further comprising:
in response to the positioning process initiated by the first terminal, determining whether to send a positioning request to the network device.

3. The method of claim 2, wherein determining whether to send the positioning request to the network device comprises at least one of:
not sending the positioning request to the network device in a case where the first terminal is outside a coverage of the network device, and the first terminal supports a sidelink (SL) positioning mode;
sending the positioning request to the network device in a case where the first terminal is within a coverage of the network device, and the first terminal supports a Uu interface positioning mode;
not sending the positioning request to the network device in response to positioning information requested by the positioning request belonging to first preset positioning information, in a case where the first terminal is within a coverage of the network device, and the first terminal supports a SL positioning mode, wherein the first preset positioning information comprises at least one of distance information, angle information or relative position information;
sending the positioning request to the network device in response to positioning information requested by the positioning request being absolute position information and the first terminal supporting a Uu interface positioning mode, in a case where the first terminal is within a coverage of the network device;
determining whether to send the positioning request to the network device according to a configured strategy, in a case where the first terminal is within a coverage of the network device, wherein the configured strategy comprises at least one of a network configured strategy or a preconfigured strategy;
sending the positioning request to the network device, in a case where the first terminal is within a coverage of the network device, and the first terminal does not support a SL positioning mode; or
not sending the positioning request to the network device, in a case where the first terminal is within a coverage of the network device through a SL relay, and the first terminal supports a SL positioning mode.

4. The method of claim 2, further comprising:
determining the positioning mode, in response to the first terminal not sending the positioning request to the network device;
receiving the positioning mode sent by the network device for the positioning request, in response to the first terminal sending the positioning request to the network device.

5. The method of claim 1, wherein determining the positioning mode corresponding to the positioning process comprises at least one of:
determining the positioning mode corresponding to the positioning process as a SL positioning mode, in a case where the first terminal is currently outside a coverage of the network device, and the first terminal supports the SL positioning mode;
determining the positioning mode corresponding to the positioning process as a Uu interface positioning mode, in a case where the first terminal is currently within a coverage of the network device, and the first terminal supports the Uu interface positioning mode;
determining the positioning mode corresponding to the positioning process as a SL positioning mode, in a case where the first terminal is within a coverage of the network device through a SL relay, and the first terminal supports the SL positioning mode;
determining the positioning mode corresponding to the positioning process as a SL positioning mode, in a case where positioning information requested by the first terminal belongs to second preset positioning information, and the first terminal supports the SL positioning mode, wherein the second preset positioning information comprises at least one of distance information, angle information, or relative position information;
determining the positioning mode corresponding to the positioning process as a Uu interface positioning mode, in a case where the first terminal supports only the Uu interface positioning mode;
determining the positioning mode corresponding to the positioning process as a SL positioning mode, in a case where the first terminal supports only the SL positioning mode; or
determining the positioning mode corresponding to the positioning process as a joint positioning mode of a SL positioning mode and a Uu interface positioning mode, in a case where a quality of service (QoS) condition of the positioning request sent to the network device meets a threshold condition, and the first terminal supports the SL positioning mode and the Uu interface positioning mode.

6. The method of claim 1, after determining the positioning mode corresponding to the positioning process, further comprising:
in response to the positioning mode corresponding to the positioning process being a SL positioning mode, determining a specific SL positioning mode; and
initiating a SL positioning process according to the specific SL positioning mode.

7. The method of claim 6, wherein determining the specific SL positioning mode comprises:
determining the specific SL positioning mode through a positioning protocol layer of the first terminal, wherein the positioning protocol layer comprises at least one of a sidelink positioning protocol (SLPP) layer, a ranging and sidelink positioning protocol (RSPP) layer, or an LTE positioning protocol (LPP) layer.

8. The method of claim 7, further comprising:
sending a positioning request by an upper layer of the first terminal to the positioning protocol layer of the first terminal, wherein a level of the upper layer of the first terminal is higher than a level of the positioning protocol layer.

9. The method of claim 8, wherein the positioning request comprises at least one of:
a positioning type; or
a positioning accuracy.

10. The method of claim 7, further comprising:
sending proximity terminal information by an upper layer of the first terminal to the positioning protocol layer of the first terminal when the upper layer sends the positioning request to the positioning protocol layer.

11. The method of claim 10, wherein the proximity terminal information comprises at least one of:
device identification information of a proximity terminal;
signal quality information of a SL sidelink of the proximity terminal;
information of roles supported by the proximity terminal;
information of positioning modes supported by the proximity terminal;
position information of the proximity terminal;
time point information of obtaining the proximity terminal information;
whether the proximity terminal supports position calculation; or
whether the proximity terminal has a capability of determining a positioning mode.

12. The method of claim 7, further comprising:
sending proximity terminal information by any of a PC5-data link (PC5-D) layer, a proximity service (ProSe) layer, or a V2X layer of the first terminal to the positioning protocol layer of the first terminal.

13. The method of claim 6, wherein determining the specific SL positioning mode comprises:
triggering a discovery process; and
determining the specific SL positioning mode according to a discovery result corresponding to the discovery process.

14. The method of claim 13, wherein triggering the discovery process comprises:
triggering the discovery process, in response to a positioning protocol layer of the first terminal receiving a positioning request sent by an upper layer of the first terminal.

15. The method of claim 14, wherein the discovery process comprises at least one of:
a ProSe discovery process; or
a V2X discovery process.

16. The method of claim 13, wherein a trigger condition for the discovery process comprises at least one of:
an upper layer of the first terminal not providing proximity terminal information of the first terminal;
the proximity terminal information provided by the upper layer not meeting information requirements;
the proximity terminal information provided by the upper layer having expired;
the positioning protocol layer having no available proximity terminal information, wherein the positioning protocol layer comprises at least one of a SLPP layer, a RSPP layer, or a LPP layer;
a positioning type requested by the positioning request from the upper layer being a relative position type;
a positioning type requested by the positioning request from the upper layer being an absolute position type;
a positioning type requested being a relative position type and/or an absolute position type; or
the first terminal currently being within a coverage of the network device.

17. The method of claim 8, 10, 14 or 16, wherein the upper layer comprises at least one of:
an application layer;
a Non-Access Stratum (NAS) layer;
a PC5-signaling transmission (PC5-S) layer; or
a location service (LCS) layer.

18. The method of claim 13, wherein triggering the discovery process comprises:
specifying to discover a terminal of a specific type, when triggering the discovery process.

19. The method of claim 18, wherein the terminal of the specific type comprises at least one of:
a SL positioning anchor UE;
a SL positioning anchor UE with position information;
a supported SL positioning anchor UE, wherein the specific SL positioning mode comprises at least one of SL-time difference of arrival (TDOA), SL-angle of arrival (AOA), or SL-round-trip time (RTT);
a SL positioning location server UE; or
a SL positioning assistant terminal.

20. The method of claim 6, wherein determining the specific SL positioning mode comprises:
in response to positioning information requested by a positioning request belonging to third preset positioning information, determining the specific SL positioning mode as a SL-RTT positioning mode, wherein the third preset positioning information comprises at least one of distance information or angle information.

21. The method of claim 6, wherein determining the specific SL positioning mode comprises:
in response to a positioning accuracy corresponding to a positioning request satisfying an accuracy condition, determining the specific SL positioning mode as a SL-TDOA positioning mode and/or a SL-AOA positioning mode.

22. The method of claim 21, further comprising:
determining the accuracy condition according to condition configuration sent by a network device; or
determining the accuracy condition according to preset condition configuration.

23. The method of claim 21, wherein a positioning type corresponding to the positioning request comprises a relative position type and/or an absolute position type.

24. The method of claim 6, wherein the first terminal has a capability of determining a positioning mode or the first terminal itself supports determining a positioning mode.

25. The method of claim 6, further comprising:
in a case where the first terminal does not have a capability of determining a positioning mode or the first terminal itself does not support determining a positioning mode, sending first request information to a second terminal, wherein the second terminal is a proximity terminal having a capability of determining a positioning mode.

26. The method of claim 25, wherein the first request information comprises at least one of:
positioning request related information; or
proximity terminal information of the first terminal.

27. The method of claim 25, after sending the first request information to the second terminal, further comprising:
receiving a positioning mode sent by the second terminal for the first request information.

28. The method of claim 1, further comprising:
sending a positioning request to an access and mobility management function (AMF).

29. A method for determining a positioning mode, performed by a second terminal, comprising:
receiving first request information sent by a first terminal, wherein the first request information is used to determine a positioning mode.

30. The method of claim 29, after receiving the first request information sent by the first terminal, further comprising:
sending a positioning mode for the first request information to the first terminal.

31. The method of claim 29, after receiving the first request information sent by the first terminal, further comprising:
determining a positioning mode, and initiating a positioning process according to the positioning mode.

32. A method for determining a positioning mode, performed by an AMF, comprising:
receiving a positioning request sent by a first terminal; and
sending the positioning request to a location management function (LMF).

33. The method of claim 32, wherein sending the positioning request to the LMF comprises:
sending proximity terminal information of the first terminal to the LMF when sending the positioning request to the LMF.

34. The method of claim 32, after sending the positioning request to the LMF, further comprising:
receiving second request information sent by the LMF for the positioning request; and
sending the second request information to the first terminal, wherein the second request information is used to request proximity terminal information of the first terminal.

35. The method of claim 34, wherein the second request information comprises requesting to discover a terminal of a specific type.

36. The method of claim 35, wherein the terminal of the specific type comprises at least one of:
a SL positioning anchor UE;
a SL positioning anchor UE with position information;
a supported SL positioning anchor UE, wherein the specific SL positioning mode comprises at least one of SL-time difference of arrival (TDOA), SL-angle of arrival (AOA), or SL-round-trip time (RTT);
a SL positioning location server UE; or
a SL positioning assistant terminal.

37. A method for determining a positioning mode, performed by a LMF, comprising:
receiving a positioning request sent by an AMF; and
in response to the positioning request, triggering a discovery process, and determining a positioning mode.

38. The method of claim 37, wherein receiving the positioning request sent by the AMF comprises:
receiving proximity terminal information of the first terminal sent by the AMF when receiving the positioning request sent by the AMF.

39. The method of claim 37, after receiving the positioning request sent by the AMF, further comprising:
sending second request information to the AMF, wherein the second request information is used to request proximity terminal information of the first terminal.

40. The method of claim 39, wherein the second request information comprises requesting to discover a terminal of a specific type.

41. The method of claim 39, wherein the terminal of the specific type comprises at least one of:
a SL positioning anchor UE;
a SL positioning anchor UE with position information;
a supported SL positioning anchor UE, wherein the specific SL positioning mode comprises at least one of SL-time difference of arrival (TDOA), SL-angle of arrival (AOA), or SL-round-trip time (RTT);
a SL positioning location server UE; or
a SL positioning assistant terminal.

42. A method for determining a positioning mode, comprising:
receiving by an AMF, a positioning request sent by a first terminal;
sending by the AMF, the positioning request to a LMF;
receiving by the LMF, the positioning request;
in response to the positioning request, triggering by the LMF a discovery process, and determining a positioning mode.

43. A method for determining a positioning mode, comprising:
receiving by a network device, a positioning request sent by a first terminal; and
in response to the positioning request, triggering by the network device a discovery process, and determining a positioning mode.

44. An apparatus for determining a positioning mode, arranged on a first terminal side, the apparatus comprising:
in response to a positioning process initiated by a first terminal, performing at least one of:
a determining module, configured to determine a positioning mode corresponding to the positioning process; or
a receiving module, configured to receive a positioning mode corresponding to the positioning process sent by a network device.

45. An apparatus for determining a positioning mode, arranged on a second terminal side, the apparatus comprising:
a receiving module, configured to receive first request information sent by a first terminal, wherein the first request information is used to determine a positioning mode.

46. An apparatus for determining a positioning mode, arranged on an AMF side, the apparatus comprising:
a receiving module, configured to receive a positioning request sent by a first terminal; and
a sending module, configured to send the positioning request to a positioning management function entity (LMF).

47. An apparatus for determining a positioning mode, arranged on an LMF side, the apparatus comprising:
a receiving module, configured to receive a positioning request sent by an AMF; and
a determining module, configured to, in response to the positioning request, trigger a discovery process, and determine a positioning mode.

48. An apparatus for determining a positioning module, comprising:
an AMF, configured to receive a positioning request sent by a first terminal;
the AMF, further configured to send the positioning request to a LMF;
the LMF, configured to receive the positioning request;
the LMF, further configured to, in response to the positioning request, trigger a discovery process, and determine a positioning mode.

49. An apparatus for determining a positioning mode, comprising:
a receiving module, configured for a network device to receive a positioning request sent by a first terminal; and
a determining module, configured for the network device to, in response to the positioning request, trigger a discovery process, and determine a positioning mode.

50. A first terminal, comprising a processor and a memory, wherein the memory stores a computer program, and the processor is configured to execute the computer program stored in the memory, to cause the device to implement the method of any of claims 1-28.

51. A second terminal, comprising a processor and a memory, wherein the memory stores a computer program, and the processor is configured to execute the computer program stored in the memory, to cause the device to implement the method of any of claims 29-31.

52. An AMF, comprising a processor and a memory, wherein the memory stores a computer program, and the processor is configured to execute the computer program stored in the memory, to cause the device to implement the method of any of claims 32-36.

53. An LMF, comprising a processor and a memory, wherein the memory stores a computer program, and the processor is configured to execute the computer program stored in the memory, to cause the device to implement the method of any of claims 37-41.

54. A core network, comprising a processor and a memory, wherein the memory stores a computer program, and the processor is configured to execute the computer program stored in the memory, to cause the device to implement the method of claim 42.

55. A network device, comprising a processor and a memory, wherein the memory stores a computer program, and the processor is configured to execute the computer program stored in the memory, to cause the device to implement the method of claim 43.

56. A communication device, comprising a processor and an interface circuit, wherein
the interface circuit is configured to receive code instructions and transmit the code instructions to the processor;
the processor is configured to run the code instructions to implement the method of any of claims 1-28, or any of claims 29-31, or any of claims 32-36, or any of claims 37-41, or claim 42, or claim 43.

57. A computer readable storage medium, stored with instructions, which when executed, cause the method of any of claims 1-28, or any of claims 29-31, or any of claims 32-36, or any of claims 37-41, or claim 42, or claim 43 to be implemented.

58. A system for determining a positioning mode, comprising:
a first terminal, configured to send a positioning request to an access and mobility management function (AMF);
the AMF, configured to receive the positioning request sent by the first terminal;
the AMF, configured to send the positioning request to a location management function (LMF);
the LMF, configured to receive the positioning request sent by the AMF;
the LMF, configured to, in response to the positioning request, trigger a discovery process, and determine a positioning mode.
